(19) Europäisches Patentamt
European Patent Office
Office européen des brevets

(11) **EP 2 693 376 A1**

(12) **EUROPEAN PATENT APPLICATION**
published in accordance with Art. 153(4) EPC

(43) Date of publication:
**05.02.2014 Bulletin 2014/06**

(51) Int Cl.:
**G06Q 10/00** *(2012.01)* **G06Q 50/32** *(2012.01)*
**H04W 4/02** *(2009.01)*

(21) Application number: **12763110.9**

(22) Date of filing: **29.03.2012**

(86) International application number:
**PCT/JP2012/058421**

(87) International publication number:
**WO 2012/133680 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011 JP 2011079029**

(71) Applicant: **NTT DOCOMO, INC.**
**Chiyoda-ku,**
**Tokyo 100-6150 (JP)**

(72) Inventors:
• **NAGATA Tomohiro**
**Tokyo 100-6150 (JP)**

• **TERADA Masayuki**
**Tokyo 100-6150 (JP)**
• **ODAWARA, Toru**
**Tokyo 100-6150 (JP)**
• **OKAJIMA Ichiro**
**Tokyo 100-6150 (JP)**

(74) Representative: **Viering, Jentschura & Partner**
**Am Brauhaus 8**
**01099 Dresden (DE)**

(54) **INFORMATION PROCESSING DEVICE AND METHOD FOR ESTIMATING NUMBER OF TERMINALS**

(57)     An object is to provide an information processing device and a method for estimating the number of terminals, which can accurately count the number of mobile terminals in an analysis target region of which address attribute is an adjacent region, taking the intake phenomenon into account.

A terminal counting portion 102 counts the numbers of position information pieces p(t) and p(t0) and the numbers of position information pieces q(t) and q(t0). An intake coefficient calculation portion 103 calculates an intake coefficient k based on the numbers of position information pieces p(t0) and q(t0). An intaked terminal calculation portion 104 calculates the number of intaked terminals q'(t) based on the counted number of position information pieces p(t) at the analysis target time t and the calculated intake coefficient k, subtracts the number of intaked terminals q'(t) from the number of position information pieces p(t), and calculates an estimated number of mobile terminals.

**Fig.1**

## Description

### Technical Field

This invention relates to an information processing device which performs population statistics processing using mobile terminals, and to a method for estimating the number of terminals.

### Background Art

It has been proposed that by acquiring position information for mobile terminals and counting the position information, the population in a target region can be calculated (Patent Reference 1).

### Citation List

### Patent Literature

Japanese Patent Application Laid-open No. 2003-30373

However, in the prior art the number of terminals actually positioned in a target region has been counted, and it has not been possible to count, by address attribute which is the residence of a user, the number of mobile terminals located in a target region.

On the other hand, when using a portable telephone as a mobile terminal, by using contract information between the carrier enterprise and the party to the contract, address attributes, which are residences, can be ascertained. Hence on this basis, the number of terminals can be counted by address attribute of mobile terminals located in a target region.

However, in this case also the following problem arises. That is, due to differences between a counting target region (for example a sector region) and an analysis target region (for example a region based on an address attribute classification), a portion of the mobile terminals located in a peripheral region adjacent to a target region or similar may be counted as the number of terminals located in the target region. That is, if an attempt is made to count the number of portable terminals by address attribute in a target region, the number of portable terminals located in a peripheral region are also counted. Such a circumstance is called an intake phenomenon in this Specification; portable terminals which are intaked and counted due to this intake phenomenon are called intaked terminals.

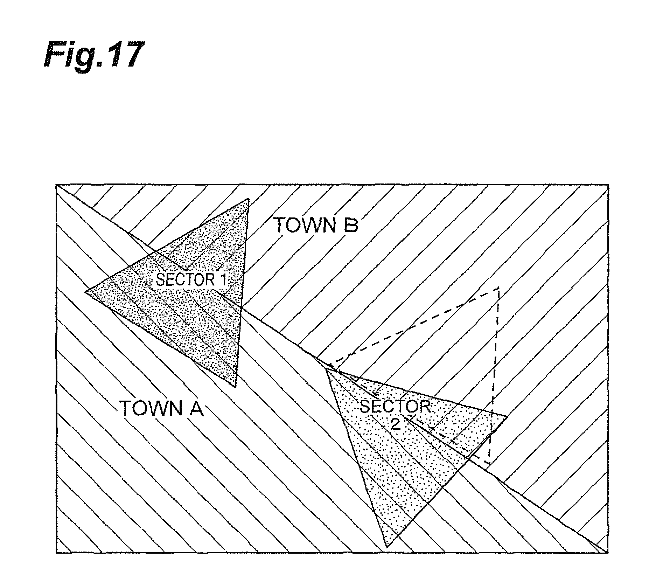

Fig. 17 shows a specific example. Fig. 17 is a schematic diagram explaining the intake phenomenon. In this schematic diagram, a triangular region denoted by sector 1 and which is a counting target region, and a triangular region denoted by sector 2, are shown. Sector 1 is a region which is formed spanning town A and town B, which are target regions defined by address attributes. When the ratio of a town A portion to the ratio of a town B portion in sector 1 is 1:1, population within the sector is assumed to be distributed uniformly, and the number of terminals in each of town A and town B can be estimated by dividing proportionally by area the number of terminals located in the sector 1 based on the ratio of the areas of town A and town B. Further, by dividing proportionally by area the number of terminals located in the sector 1 for each address attribute (town A and town B), the number of terminals in the town A portion for each address attribute and the number of terminals in the town B portion for each address attribute can be estimated. However, in either estimation, it is assumed that the population distribution within a sector is uniform, and so the above-described problem (intake phenomenon) occurs. For example, it is conceivable that a portion of town B terminals with address attributes actually located in the town B portion may be estimated as the number of town B terminals with address attributes located in the town A portion.

Further, the explanation assumed that in sector 1 the actual positions and theoretical positions are the same; but in many cases the actual positions and theoretical positions are different. An example of this is shown in sector 2. Sector 2 is actually in the position indicated by the dashed line, by in theory, the number of terminals is estimated assuming the position indicated by the solid line. Using the sector 2 indicated by the solid line, if the numbers of terminals are calculated for a town A portion and a town B portion in sector 2, the numbers of terminals are calculated based on the areas.

However, because the portion indicated by the dashed line is the disposition of the actual sector 2, the numbers of terminals calculated based on the actual sector 2 is erroneous. That is, in the example of Fig. 17, in actuality sector 2 is not a portion overlapping the town A portion, but is entirely in the town B portion. However, in theory this disposition is ascertained as being shifted, and there is a large portion overlapping town A. Hence even when the numbers of terminals are calculated based on this area ratio, the numbers will be erroneous.

A counting target region (or a position information counting unit region, described below) is a unit in which the number of mobile terminals can be counted, and is for example a sector region or similar. In this Specification, a counting target region is a counting unit when acquiring summary position information using base stations of mobile terminals. An analysis target region is a region which an operator (in general a carrier enterprise, or an enterprise which processes statistical information) which performs operations to calculate population based on numbers of mobile terminals specifies for analysis. For example, such a region may be a region based on an address attribute classification, a city/town/village or other classification, or may be a region comprising a mesh shape specified separately. In general, analysis target regions and counting target regions do not coincide.

## Summary of Invention

### Technical Problem

In order to resolve the above-described problems, the object of this invention is to provide an information processing device and a method for estimating the number of terminals which enables precise counting of the number of mobile terminals by address attribute in an analysis target region.

### Solution to Problem

In order to resolve the above-described problems, an information processing device of this invention comprises acquisition means for acquiring position information for mobile terminals in a counting target region that is a unit for counting mobile terminal position information, and address attribute information for the mobile terminals; region counting means for counting the number of mobile terminals in an analysis target region which is a region specified in advance, based on position information for mobile terminals of which address attribute is an adjacent region that is adjacent to the analysis target region, at a reference time and at an analysis target time based on the position information acquired by the acquisition means; adjacent region counting means for counting the number of mobile terminals in the adjacent region based on position information for mobile terminals of which address attribute is the adjacent region, at the reference time and at the analysis target time based on the position information acquired by the acquisition means; and intaked terminal calculation means for calculating the number of intaked terminals based on the number of mobile terminals in the analysis target region at the reference time counted by the region counting means, the number of mobile terminals in the adjacent region at the reference time counted by the adjacent region counting means, and the number of mobile terminals at the analysis target time counted by the adjacent region counting means.

Further, a method for estimating the number of terminals of this invention comprises an acquisition step of acquiring position information for mobile terminals in a counting target region that is a unit for counting mobile terminal position information, and address attribute information for the mobile terminals; a region counting step of counting the number of mobile terminals in an analysis target region which is a region specified in advance, based on position information for mobile terminals of which address attribute is an adjacent region that is adjacent to the analysis target region, at a reference time and at an analysis target time based on the position information acquired in the acquisition step; an adjacent region counting step of counting the number of mobile terminals in the adjacent region based on position information for mobile terminals of which address attribute is the adjacent region, at the reference time and at the analysis target time based on the position information acquired in the acquisition step; and an intaked terminal calculation step of calculating the number of intaked terminals based on the number of mobile terminals in the analysis target region at the reference time counted in the region counting step, the number of mobile terminals in the adjacent region at the reference time counted in the adjacent region counting step, and the number of mobile terminals at the analysis target time counted in the adjacent region counting step.

By means of this invention, in an analysis target region, the number of mobile terminals is counted based on position information for mobile terminals of which address attribute is an adjacent region that is adjacent to the analysis target region, at a reference time and at the analysis target time, and in addition, the number of mobile terminals in the adjacent region is counted based on position information for mobile terminals of which address attribute is the adjacent region at the reference time and at the analysis target time. And, the number of intaked terminals is calculated from the counted number of mobile terminals in the analysis target region at the reference time, and from the counted number of mobile terminals in the adjacent region at the reference time and the counted number of mobile terminals at the analysis target time. By this means, the number of mobile terminals can be counted taking the intake phenomenon into account, and the number of mobile terminals can be counted more precisely by address attribute in an analysis target region.

Further, an information processing device of this invention further comprises intake coefficient calculation means for calculating an intake coefficient from a ratio of the number of mobile terminals in the analysis target region at the reference time counted by the region counting means to the number of mobile terminals in the adjacent region at the reference time counted by the adjacent region counting means; the intaked terminal calculation means multiplies the number of mobile terminals at the analysis target time counted by the adjacent region counting means, by the intake coefficient calculated by the intake coefficient calculation means, to calculate the number of intaked terminals.

Further, an information processing device of this invention further comprises intake coefficient calculation means for calculating a second intake coefficient from a ratio of the number of mobile terminals in the adjacent region at the reference time counted by the adjacent region counting means to the number of mobile terminals in the adjacent region at the analysis target time counted by the adjacent region counting means; the intaked terminal calculation means multiplies the number of mobile terminals at the reference time counted by the region counting means, by the second intake coefficient calculated by the second intake coefficient calculation means, to calculate the number of intaked terminals.

Further, an information processing device of this invention further comprises mobile terminal calculation means for subtracting the number of intaked terminals that is calculated by the intaked terminal calculation means, from the number of mobile terminals counted by the region counting means, to calculate an estimated number of mobile terminals.

Further, an information processing device of this invention comprises acquisition means for acquiring position information for mobile terminals in a counting target region that is a unit for counting mobile terminal position information, and address attribute information for the mobile terminals; region counting means for counting the number of mobile terminals, in an analysis target region which is a region specified in advance, based on position information for mobile terminals of which address attribute is an adjacent region that is adjacent to the analysis target region, at a reference time and at an analysis target time based on the position information acquired by the acquisition means; adjacent region counting means for counting the number of mobile terminals in the adjacent region based on position information for mobile terminals of which address attribute is the adjacent region, at the reference time and at the analysis target time based on the position information acquired by the acquisition means; intake coefficient calculation means for calculating an intake coefficient from a ratio of the number of mobile terminals in the analysis target region at the reference time counted by the region counting means to the number of mobile terminals in the adjacent region at the reference time counted by the adjacent region counting  means; intaked terminal calculation means for multiplying the number of mobile terminals at the analysis target time counted by the adjacent region counting means, by the intake coefficient calculated by the intake coefficient calculation means, to calculate the number of intaked terminals; and mobile terminal calculation means for subtracting the number of intaked terminals that is calculated by the intaked terminal calculation means, from the number of mobile terminals counted by the region counting means, to calculate an estimated number of mobile terminals.

Further, an information processing device of this invention comprises acquisition means for acquiring position information for mobile terminals in a counting target region that is a unit for counting mobile terminal position information, and address attribute information for the mobile terminals; region counting means for counting the number of mobile terminals, in an analysis target region which is a region specified in advance, based on position information for mobile terminals of which address attribute is an adjacent region that is adjacent to the analysis target region, at a reference time and at an analysis target time based on the position information acquired by the acquisition means; adjacent region counting means for counting the number of mobile terminals in the adjacent region based on position information for mobile terminals of which address attribute is the adjacent region, at the reference time and at the analysis target time based on the position information acquired by the acquisition means; second intake coefficient calculation means for calculating a second intake coefficient from a ratio of the number of mobile terminals in the  adjacent region at the reference time counted by the adjacent region counting means to the number of mobile terminals in the adjacent region at the analysis target time counted by the adjacent region counting means; second intaked terminal calculation means for multiplying the number of mobile terminals at the reference time counted by the region counting means, by the intake coefficient calculated by the second intake coefficient calculation means, to calculate the number of intaked terminals; and mobile terminal calculation means for subtracting the number of intaked terminals that is calculated by the intaked terminal calculation means, from the number of mobile terminals counted by the region counting means, to calculate an estimated number of mobile terminals.

Further, a method for estimating the number of terminals comprises an acquisition step of acquiring position information for mobile terminals in a counting target region that is a unit for counting mobile terminal position information, and address attribute information for the mobile terminals; a region counting step of counting the number of mobile terminals, in an analysis target region which is a region specified in advance, based on position information for mobile terminals of which address attribute is an adjacent region that is adjacent to the analysis target region, at a reference time and at an analysis target time based on the position information acquired in the acquisition step; an adjacent region counting step of counting the number of mobile terminals in the adjacent region based on position information for mobile terminals of which address attribute is the adjacent region, at the reference time and at the analysis target time  based on the position information acquired in the acquisition step; an intake coefficient calculation step of calculating an intake coefficient from a ratio of the number of mobile terminals in the analysis target region at the reference time counted in the region counting step to the number of mobile terminals in the adjacent region at the reference time counted in the adjacent region counting step; an intaked terminal calculation step of multiplying the number of mobile terminals at the analysis target time counted in the region counting step, by the intake coefficient calculated in the intake coefficient calculation step, to calculate the number of intaked terminals; and a mobile terminal calculation step of subtracting the number of intaked terminals that is calculated in the intaked terminal calculation step, from the number of mobile terminals at the analysis target time counted in the region counting means, to calculate an estimated number of mobile terminals.

Further, a method for estimating the number of terminals of this invention comprises an acquisition step of acquiring position information for mobile terminals in a counting target region that is a unit for counting mobile terminal position information, and address attribute information for the mobile terminals; a region counting step of counting the number of mobile terminals in an analysis target region which is a region specified in advance, based on position information for mobile terminals of which address attribute is an adjacent region that is adjacent to the analysis target region, at a reference time and at an analysis target time based on the position information acquired in the acquisition step; an adjacent region counting step of counting the number of mobile terminals in the adjacent region based on position information for mobile terminals of which address attribute is the adjacent region, at the reference time and at the analysis target time based on the position information acquired in the acquisition step; a second intake coefficient calculation step of calculating a second intake coefficient from a ratio of the number of mobile terminals in the adjacent region at the reference time counted in the region counting step to the number of mobile terminals in the adjacent region at the analysis target time counted in the adjacent region counting step; a second intaked terminal calculation step of multiplying the number of mobile terminals at the reference time counted in the region counting step by the intake coefficient calculated in the second intake coefficient calculation step, and calculating the number of intaked terminals; and a mobile terminal calculation step of subtracting the number of intaked terminals calculated in the intaked terminal calculation step from the number of mobile terminals counted in the region counting step, and calculating an estimated number of mobile terminals.

By means of this invention, in an analysis target region, the number of mobile terminals is counted based on position information for mobile terminals of which address attribute is an adjacent region that is adjacent to the analysis target region, at a reference time and at an analysis target time, and moreover in the adjacent region, the number of mobile terminals is counted based on position information for mobile terminals of which address attribute is the adjacent region at the reference time and at the analysis target time. An intake coefficient is calculated from the ratio of the number of mobile terminals counted for the analysis target region at the reference time to the number of mobile terminals counted for the adjacent region at the reference time, the counted number of mobile terminals at the analysis target time is multiplied by the calculated intake coefficient to calculate the number of intaked terminals, and the number of intaked terminals is subtracted from the number of mobile terminals at the analysis target time to calculate an estimated number of mobile terminals. By this means, the number of mobile terminals taking the intake phenomenon into account can be counted, and the number of mobile terminals can be counted with higher precision by address attribute in an analysis target region.

Further, an information processing device of this invention comprises acquisition means for acquiring position information for mobile terminals in a counting target region that is a unit for counting mobile terminal position information, and address attribute information for the mobile terminals; region counting means for counting the number of mobile terminals, in an analysis target region which is a region specified in advance, based on position information for mobile terminals of which address attribute is the analysis region, at a reference time and at an analysis target time based on the position information acquired by the acquisition means; adjacent region counting means for counting, by adjacent region, the number of mobile terminals, in an adjacent region that is adjacent to the analysis target region, based on position information for mobile terminals of which address attribute is the analysis target region at the reference time and at the analysis target time based on the position information acquired by the acquisition means; intake coefficient calculation means for calculating an intake coefficient by adjacent region from the ratio of the number of mobile terminals in the analysis target region at the reference time counted by the region counting means to the number of mobile terminals in the adjacent region at the reference time counted by the adjacent region counting means; intaked terminal calculation means for multiplying the number of mobile terminals at the analysis target time counted by the adjacent region counting means, by the intake coefficient by adjacent region calculated by the intake coefficient calculation means, and calculating the number of intaked terminals for each adjacent region; and mobile terminal calculation means for adding the total number of intaked terminals, obtained by totaling the number of intaked terminals by adjacent region calculated by the intaked terminal calculation means, to the number of mobile terminals counted by the region counting means, and calculating an estimated number of mobile terminals.

Further, an information processing device of this invention comprises acquisition means for acquiring position information for mobile terminals in a counting target region that is a unit for counting mobile terminal position information, and address attribute information for the mobile terminals; region counting means for counting the number of mobile terminals, in an analysis target region which is a region specified in advance, based on position information for mobile terminals of which address attribute is the analysis region, at a reference time and at an analysis target time based on the position information acquired by the acquisition means; adjacent region counting means for counting, by adjacent region, the number of mobile terminals, in an adjacent region that is adjacent to the analysis target region, based on position information for mobile terminals of which address attribute is the analysis target region at the reference time and at the analysis target time based on the position information acquired by the acquisition means; second intake coefficient calculation means for calculating a second intake coefficient from the ratio of the number of mobile terminals in the analysis target region at the reference time counted by the region counting means to the number of mobile terminals in the analysis target region at the analysis target time counted by the adjacent region counting means; second intaked terminal calculation means for multiplying the number of mobile terminals at the reference time counted by the adj acent region counting means, by the intake coefficient by adjacent region calculated by the second intake coefficient calculation means, and calculating the number of intaked terminals for each adjacent region; and mobile terminal calculation means for adding the total number of intaked terminals, obtained by totaling the number of intaked terminals by adjacent region calculated by the intaked terminal calculation means, to the number of mobile terminals counted by the region counting means, and calculating an estimated number of mobile terminals.

Further, a method for estimating the number of terminals of this invention comprises an acquisition step of acquiring position information for mobile terminals in a counting target region that is a unit for counting mobile terminal position information, and address attribute information for the mobile terminals; a region counting step of counting the number of mobile terminals, in an analysis target region which is a region specified in advance, based on position information  for mobile terminals of which address attribute is the analysis target region, at a reference time and at an analysis target time based on the position information acquired in the acquisition step; an adjacent region counting step of counting, by adjacent region, the number of mobile terminals, in an adjacent region that is adjacent to the analysis target region, based on position information for mobile terminals of which address attribute is the analysis target region at the reference time and at the analysis target time based on the position information acquired in the acquisition step; an intake coefficient calculation step of calculating an intake coefficient by adjacent region from the ratio of the number of terminals in the analysis target region at the reference time counted in the region counting step to the number of mobile terminals in the adjacent region at the reference time counted in the adjacent region counting step; an intaked terminal calculation step of multiplying the number of mobile terminals at the analysis target time counted in the region counting step, by the intake coefficient by adjacent region calculated in the intake coefficient calculation step, and calculating the number of intaked terminals for each adjacent region; and a mobile terminal calculation step of adding the total number of intaked terminals, obtained by totaling the number of intaked terminals by adjacent region calculated in the intaked terminal calculation step, to the number of mobile terminals counted in the region counting step, and calculating an estimated number of mobile terminals.

Further, a method for estimating the number of terminals of this invention comprises an acquisition step of acquiring position information for mobile terminals in a counting target region that is a  unit for counting mobile terminal position information, and address attribute information for the mobile terminals; a region counting step of counting the number of mobile terminals, in an analysis target region which is a region specified in advance, based on position information for mobile terminals of which address attribute is the analysis target region, at a reference time and at an analysis target time based on the position information acquired in the acquisition step; an adjacent region counting step of counting, by adjacent region, the number of mobile terminals, in an adjacent region that is adjacent to the analysis target region, based on position information for mobile terminals of which address attribute is the analysis target region at the reference time and at the analysis target time based on the position information acquired in the acquisition step; a second intake coefficient calculation step of calculating a second intake coefficient from the ratio of the number of terminals in the analysis target region at the reference time counted in the region counting step to the number of mobile terminals in the analysis target region at the analysis target time counted in the adjacent region counting step; a second intaked terminal calculation step of multiplying the number of mobile terminals at the reference time counted by the adjacent region counting means, by the intake coefficient by adjacent region calculated in the second intake coefficient calculation step, and calculating the number of intaked terminals for each adjacent region; and a mobile terminal calculation step of adding the total number of intaked terminals, obtained by totaling the number of intaked terminals by adjacent region calculated in the intaked terminal calculation step, to the number of mobile  terminals counted in the region counting step, and calculating an estimated number of mobile terminals.

By means of this invention, in an analysis target region which is a region specified in advance, the number of mobile terminals is counted based on position information for mobile terminals of which address attribute is the analysis target region, at a reference time and at an analysis target time based on acquired position information, and moreover, in an adjacent region that is adjacent to the analysis target region, the number of mobile terminals is counted by adjacent region based on position information for mobile terminals of which address attribute is the analysis target region at the reference time and at the analysis target time. Intake coefficients are calculated by adjacent region from the counted number of mobile terminals at the reference time and at the analysis target time to the counted number of mobile terminals in the adjacent region at the reference time, and the counted number of mobile terminals at the analysis target time is multiplied by the intake coefficient by adjacent region to calculate the number of intaked terminals for each adjacent region. And, the total number of intaked terminals, obtained by totaling the number of intaked terminals calculated by adjacent region, is added to the number of mobile terminals counted in the region counting step, to calculate an estimated number of mobile terminals. By this means, by returning the number of intaked terminals in an adjacent region to the number of mobile terminals in the analysis target region, the number of mobile terminals in the analysis target region can be correctly determined taking the intake phenomenon into account.

Further, an information processing device of this invention comprises decision means for deciding, among position information counting unit regions which are counting units for position information, one or a plurality of position information counting unit regions included in an analysis target region which is a region specified in advance, as a position information counting region; expansion coefficient calculation means for calculating a region expansion coefficient from an area ratio of the analysis target region to the position information counting region decided by the decision means; counting means for counting, by address attribute, the number of mobile terminals located in the position information counting region decided by the decision means, based on position information; and

calculation means for multiplying the number of mobile terminals by address attribute counted by the counting means, by the region expansion coefficient calculated by the expansion coefficient calculation means, to calculate an estimated number of mobile terminals.

Further, a method for estimating the number of terminals of this invention comprises a decision step of deciding, among position information counting unit regions which are counting units for position information, one or a plurality of position information counting unit regions included in an analysis target region which is a region specified in advance, as a position information counting region; an expansion coefficient calculation step of calculating a region expansion coefficient from an area ratio of the analysis target region to the position information counting region decided in the decision step; a counting step of counting, by address attribute, the number of mobile terminals located in the position information counting unit region decided in the decision step, based on position information; and a calculation step of multiplying the number of mobile terminals by address attribute counted in the counting step, by the region expansion coefficient calculated in the expansion coefficient calculation step, to calculate an estimated number of mobile terminals.

By means of this invention, a position information counting unit region which is a counting unit for position information, included in a specified analysis target region, is decided, and a region expansion coefficient is calculated from the area ratio of the specified analysis target region to the decided position information counting unit region. And, the number of mobile terminals located in the decided position information counting region is counted by address attribute, and the counted number of mobile terminals by address attribute is multiplied by the calculated expansion coefficient to calculate the expanded number of mobile terminals. By thus counting the number of mobile terminals such that in an adjacent region, mobile terminals for counting near a boundary line of the adjacent region with the analysis target region (the outer edge portion of the adjacent region) are not counted, errors due to the intake phenomenon can be reduced, and the number of mobile terminals can be counted accurately.

Further, an information processing device of this invention comprises decision means for deciding, among position information counting unit regions which are counting units for position information, one or a plurality of position information counting unit regions included in an analysis target region which is a region specified in advance, as a position information counting region; address attribute ratio calculation means for calculating a ratio of address attributes of mobile terminals, in the position information counting region decided by the decision means; mobile terminal calculation means for calculating the number of mobile terminals in the analysis target region based on position information; and attribute-specific mobile terminal calculation means for multiplying the number of terminals calculated by the mobile terminal calculation means, by the ratio of one address attribute of the mobile terminals calculated by the address attribute ratio calculation means, to calculate an estimated number of mobile terminals for the one address attribute in the analysis target region.

Further, a method for estimating the number of terminals of this invention comprises a decision step of deciding, among position information counting unit regions which are counting units for position information, one or a plurality of position information counting unit regions included in an analysis target region which is a region specified in advance, as a position information counting region; an address attribute ratio calculation step of calculating a ratio of address attributes of mobile terminals, in the position information counting region decided in the decision step; a mobile terminal calculation step of calculating the number of mobile terminals in the analysis target region based on position information; and an attribute-specific mobile terminal calculation step of multiplying the number of terminals calculated in the mobile terminal calculation step, by the ratio of one address attribute of the mobile terminals calculated in the address attribute ratio calculation step, to calculate an estimated number of mobile terminals for the one address attribute in the analysis target region.

By means of this invention, a position information counting region is decided from position information counting unit regions included in a specified analysis target region, and the ratio of address attributes in the decided position information counting region is calculated. And, the number of mobile terminals in the specified analysis target region is calculated based on position information, the calculated number of terminals is multiplied by the calculated ratio of the one address attribute, and the number of mobile terminals having the one address attribute in the analysis target region is calculated. By thus counting the number of mobile terminals such that in an adjacent region, mobile terminals for counting near a boundary line of the adjacent region with the analysis target region (the outer edge portion of the adjacent region) are not counted, errors due to the intake phenomenon can be reduced, and the number of mobile terminals can be counted accurately.

**Advantageous Effects of Invention**

By means of this invention, the number of mobile terminals in an analysis target region can be counted more precisely by address attribute.

**Brief Description of Drawings**

Fig. 1 is a block diagram showing the functional configuration of the information processing device 100 of an embodiment;
Fig. 2 shows the hardware configuration of the information processing device 100;
Fig. 3 is a flowchart showing processing of the information processing device 100;
Fig. 4 explains a specific example of a database stored in the position information database (DB) 106;
Fig. 5 explains in summary results of counting the number of terminals;
Fig. 6 explains calculation of the number of mobile terminals p(t) in an analysis target region p;
Fig. 7 explains the relation between the analysis target region p and an adjacent region q in a modified example;
Fig. 8 is a summary diagram showing processing to calculate the number of intaked terminals q'(t) of which address attribute is the analysis target region p in the adjacent region q, in a modified example;
Fig. 9 is a flowchart of calculation of the number of intaked terminals in each adjacent region in a modified example of the embodiment;
Fig. 10 is a flowchart showing processing to add the number of intaked terminals to the number of mobile terminals in the analysis target region in a modified example;
Fig. 11 is a block diagram showing the functional configuration of the information processing device 200 of a second embodiment;
Fig. 12 explains the relation between an analysis target region M and position information counting unit regions S;
Fig. 13 explains the relation between an analysis target region M  and position information counting unit regions S1 and S2;
Fig. 14 is a flowchart showing processing of the information processing device 200;
Fig. 15 is a block diagram showing the functions of the information processing device 200a in a modified example;
Fig. 16 is a flowchart showing processing of the information processing device 200a;
Fig. 17 is an explanatory diagram to explain the intake phenomenon;
Fig. 18 explains an approach to estimating the number of terminals; and
Fig. 19 explains a method of calculating an estimated number of terminals.

**Description of Embodiments**

Embodiments of the invention are explained referring to the attached drawings. Where possible, the same symbols are assigned to the same portions, and redundant explanations are omitted.

First Embodiment

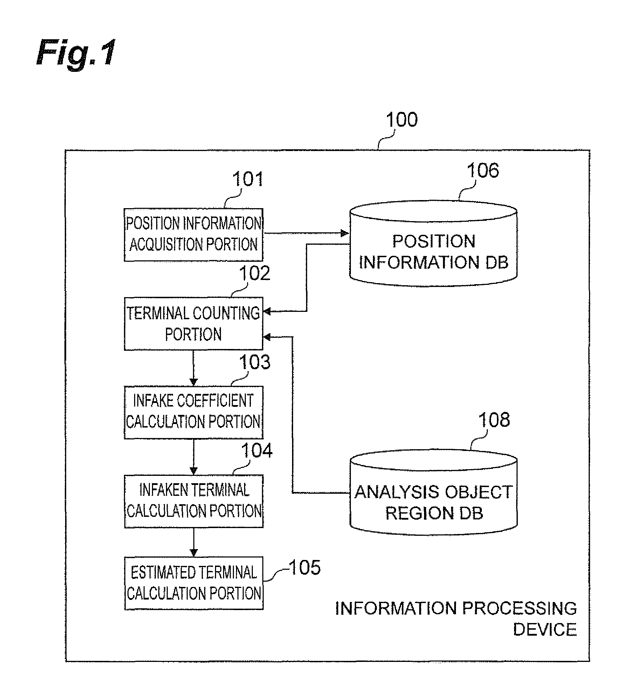

Fig. 1 is a block diagram showing the functional configuration of the information processing device 100 of this embodiment. As shown in Fig. 1, this information processing device 100 includes a position information acquisition portion 101 (acquisition means), terminal counting portion 102 (region counting means, adjacent region counting means), intake coefficient calculation portion 103 (intake coefficient calculation means), intaked terminal calculation portion 104 (intaked terminal calculation means), estimated terminal calculation portion 105  (mobile terminal calculation means), position information DB 106, and analysis target region DB 108.

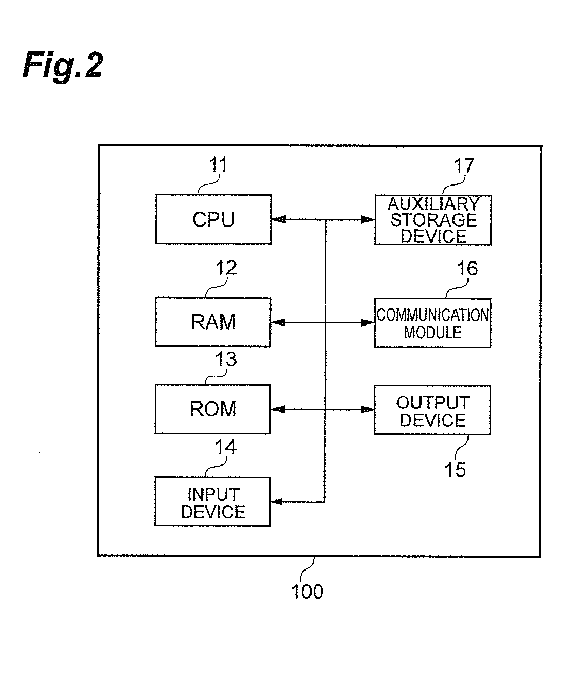

Fig. 2 shows the hardware configuration of the information processing device 100. As shown in Fig. 2, the information processing device 100 shown in Fig. 1 physically is configured as a computer system including a CPU 11, RAM 12 and ROM 13 as main memory devices, an input device 14 which such as a keyboard and mouse or similar, display or other output device 15, communication module 16 which is a network card or other data transmission/reception device, and auxiliary storage device 17 such as a hard disk drive, semiconductor memory or similar. The functions explained in Fig. 1 are realized by causing prescribed computer software to be read into the CPU 11, RAM 12 or other hardware shown in Fig. 2, and operating the input device 14, output device 15 and communication module 16 under control of the CPU 11, and reading and writing data in the RAM 12 and auxiliary storage device 17. Below, each function block is explained based on the function blocks shown.

The position information acquisition portion 101 is a portion which acquires position information for mobile terminals, and acquires, together with address attributes, position information for mobile terminals in a counting target region which is a counting unit for mobile terminal position information (based for example on position registration signals) from a position information management server which stores location position information stored by a communication carrier enterprise. From the standpoint of protection of privacy, information which identifies users is not acquired, and only information sufficient to determine attributes is acquired. The position information and address attribute information acquired by the position information acquisition portion 101 is stored in the position information DB 106. In this embodiment, the position information acquisition portion 101 may acquire position information from a source other than the above-described position information management server.

The terminal counting portion 102 is a portion which calculates the number of mobile terminals in an analysis target region by address attribute, based on information stored in the position information DB 106 and in the analysis target region DB 108. As explained below, analysis target regions determined in advance are stored in the analysis target region DB 108, and as explained below, position information, acquired time information (or information on the time of location), and address attribute information are stored in the position information DB 106.

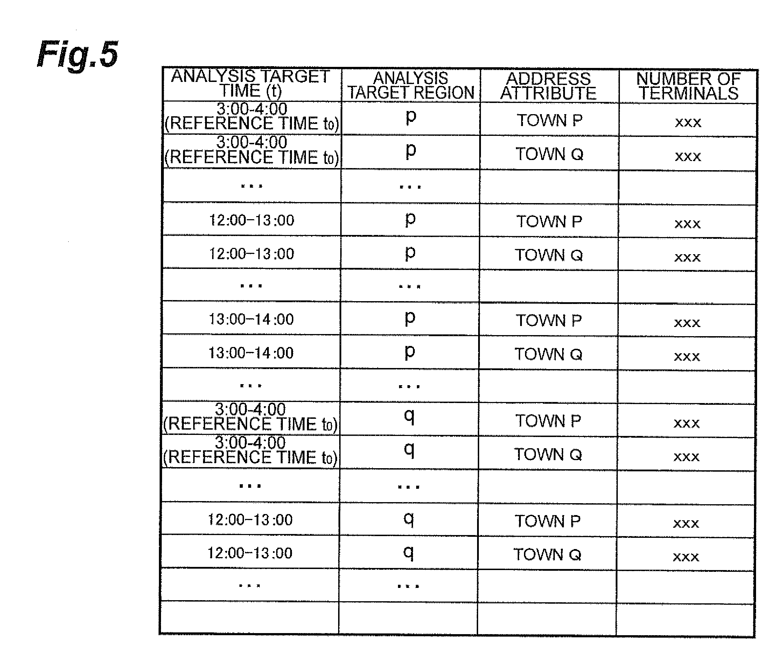

The terminal counting portion 102 counts the number of mobile terminals, by analysis target time t, analysis target region p and address attribute n, by counting position information stored in the position information DB 106. Fig. 5 explains in summary this counting. As shown in Fig. 5, the number of mobile terminals p(t) is counted by analysis target region and address attribute by one-hour analysis target time t. Here, as the analysis target time t, taking 3:00-4:00 AM as a reference time $t_0$, the number of mobile terminals p(t) is counted by analysis target region and address attribute for each one-hour period.

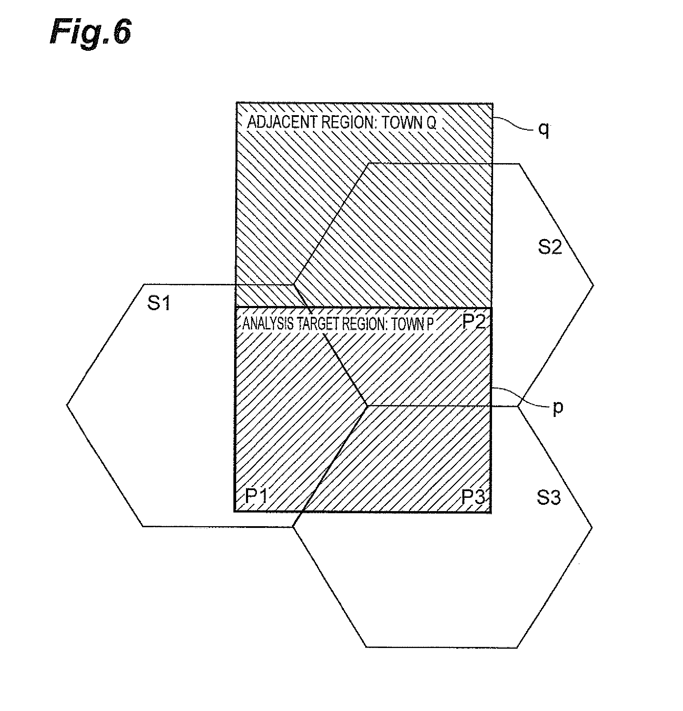

The position in which an analysis target region p is disposed is normally shifted relative to a plurality of sector regions or other regions for counting, and overlaps with a portion thereof. In this embodiment, the analysis target region p overlaps with a portion of the sectors, and based on the area ratio thereof, the number of mobile terminals p(t) in the analysis target region p can be calculated. A specific example is shown in Fig. 6. The analysis target region p (town P) overlaps with portions of sectors S1 to S3. Taking the portion in which the analysis target region p and the sector S1 overlap to be region p1, the portion in which the analysis target region p and the sector S2 overlap to be region p2, and the portion in which the analysis target region p and the sector S3 overlap to be region p3, the area ratios of each of the regions p1 to p3 to each of the sectors S1 to S3 are calculated, and by multiplying the area ratios by the numbers of mobile terminals for each of the sectors S1 to S3 and totaling, the number of mobile terminals in the analysis target region p can be estimated.

Based on this information, the terminal counting portion 102 can estimate the number of mobile terminals $p_n$(t) by address attribute n at the analysis target time t and in the analysis target region p.

The intake coefficient calculation portion 103 is a portion which calculates an intake coefficient, indicating the proportion of the number of so-called intaked mobile terminals to the number of terminals postulated to be in an adjacent region q, of which address attribute is the adjacent region q (town Q) adjacent to the analysis target region p (town P) in the analysis target period. The number of intaked mobile terminals is the number of terminals which, due to the intake phenomenon, are counted as in the analysis target region p but should be in the adjacent region q of which address attribute is the adjacent region q.

The intake coefficient k can be represented as indicated below. When at an analysis target time t, the number of mobile terminals counted as in the adjacent region q of which address attribute n is the adjacent region q is defined as $q_n$(t), and the number of mobile terminals in the analysis target region p of which address attribute n is the adjacent region q is defined as $p_n$(t), the intake coefficient $k_n$ can, for a reference time t0, be expressed as $p_n(t_0)/q_n(t_0)$.

A method of determining the intake coefficient k is explained in detail. The intake coefficient represents the proportion of intaking of the number of mobile terminals postulated to exist in an adjacent region q when attempting to estimate the number of mobile terminals of which address attribute is the adjacent region q in an analysis target region p. Below, the method of calculation is explained in detail.

As a hypothesis, suppose that

$$q_n{}'(t_0) = p_n(t_0) \qquad\qquad (1).$$

That is, all mobile terminals of which address attribute n is the adjacent region q in the analysis target region p at reference time t0 are in error due to the intake phenomenon. When the reference time t0 is late at night or some other time slot at which not many people are walking about, mobile terminals of which address attribute is the adjacent region q in the analysis target region p can be understood to be in error due to the intake phenomenon. In this case, at the reference time $t_0$, it is conceivable that there exist no mobile terminals of which address attribute n is the adjacent region q in the analysis target region p. Hence it is seen that the above-described hypothetical equation (1) obtains.

As a further hypothesis, suppose that

$$q_n{}'(t) \propto q_n(t) \qquad\qquad (2).$$

The error due to the intake phenomenon is proportional to the trend in the number of mobile terminals of which address attribute n is the adjacent region q in the adjacent region q.

Because $q_n{}'(t) \propto q_n(t)$, the expression

$$q_n{}'(t)/q_n(t) = k_n \text{ (where k is a constant)} \qquad\qquad (3)$$

can be used.

Here, if t = t0, this can be written

$$k_n = q_n{}'(t_0)/q_n(t_0) \qquad\qquad (4).$$

And, using equation (1) in this equation (4),

$$k_n = p_n(t_0)/q_n(t_0) \qquad\qquad (5)$$

is obtained.

From the above, the intake coefficient $k_n$ can be calculated. As explained in describing the method of calculating p(t), q(t) can be calculated using the area ratio of the adjacent region q to the portion overlapping sectors. In general trends in population by analysis target time t can be ascertained from population censuses and similar, and such statistical information may be used.

The intaked terminal calculation portion 104 is a portion which calculates the intaked portion of the number of mobile terminals $q_n{}'(t)$ of which address attribute n is the adjacent region q in the analysis target region p at the analysis target time t. Specifically, the intaked terminal calculation portion 104 performs a computation using equation (6) below, to calculate the number of intaked terminals $q_n{}'(t)$.

$$q_n{}'(t) = k_n \times q_n(t) \qquad\qquad (6)$$

As a modified example of the intake coefficient calculation method, the following processing may be performed. That is, the intake coefficient calculation portion 103 is a portion which calculates a second intake coefficient, indicating the proportion of the number of so-called intaked mobile terminals to the number of mobile terminals postulated to be in the analysis target region p and of which address attribute is the adjacent region q (town Q) adjacent to the analysis target region p (town P) at the reference time.

The second intake coefficient k2 can be represented as follows. That is, when at a reference time $t_0$, the number of mobile terminals estimated to be in the adjacent region q of which address attribute n is the adjacent region q is defined as $q_n(t_0)$, and the number of mobile terminals at the analysis target time t estimated to be in the adjacent region q of which address attribute n is the adjacent region q is defined as $q_n(t)$, the second intake coefficient can be expressed as

$$k2_n = q_n(t_0)/q_n(t) \qquad\qquad (3a).$$

A method of determining the second intake coefficient k2 is explained in detail. From equation (5) and equation (6),

$$q_n'(t) = (p_n(t_0)/q_n(t_0)) \times q_n(t) \qquad (4a)$$

is obtained, and when $p_n(t_0)$ is regarded as a variable, with

$$k2_n = q_n(t)/q_n(t_0) \qquad (5a)$$

the second intake coefficient $k2_n$ is determined, and by multiplying $k2_n$ by $p_n(t_0)$, the intaked portion of the number of mobile terminals $q_n'(t)$ can be determined.

The intaked terminal calculation portion 104 then can calculate the intaked portion of the number of mobile terminals $q_n'(t)$ of which address attribute n is the adjacent region q in the analysis target region p at the analysis target time t. Specifically, the intaked terminal calculation portion 104 performs computations according to the following equation (6a), and calculates the number of intaked terminals $q_n'(t)$.

$$q_n'(t) = k2_n \times p_n(t_0) \qquad (6a)$$

The estimated terminal calculation portion 105 is a portion which subtracts the number of intaked terminals $q_n'$(t), calculated by the intaked terminal calculation portion 104, from the number of mobile terminals $p_n(t)$ in the analysis target region p (see expression (7)).

$$p_n(t) - q_n'(t) \qquad (7)$$

By this means, an estimated number of mobile terminals of which address attribute is the adjacent region and existing in the analysis target region, with the number of intaked terminals removed, can be calculated. By performing this processing for each address attribute n which is an adjacent region, the number of mobile terminals having address attributes n in the analysis target region p can be calculated for all address attributes.

The position information DB 106 is a portion which stores position information and address attribute information by mobile terminal, acquired by the position information acquisition portion 101. Position information may be summary position information such as a sector ID, or may be coordinate information acquired by GPS or similar. Address attribute information is acquired using information for parties to contracts, held by the communication carrier enterprise.

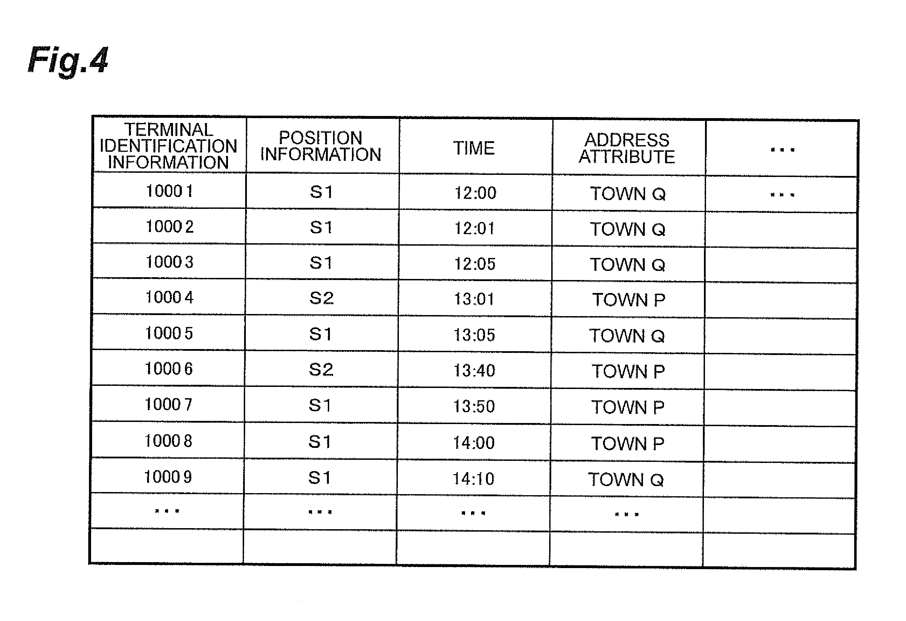

A specific example of a database stored in the position information DB 106 is explained. Fig. 4 explains the specific example of a database stored in the position information DB 106.

As shown in Fig. 4, at least terminal identification information, position information, time, and address attribute are stored. Terminal information is information to identify a mobile terminal; from the standpoint of protection of privacy, it is preferable that this information be converted into values unique to the information processing device 100 storing the information in this embodiment. Position information indicates the position in which the mobile terminal is located, such as a sector ID, and time indicates the time of this location. The address attribute indicates the address of the user of the a mobile terminal, acquired based on information for the party to the contract.

The analysis target region DB 108 is a portion which stores analysis target regions; specifically, an analysis target region may be polygon data indicating an administrative district such as a prefecture, city, town or village, or may be polygon data divided into rectangular mesh shapes. That is, an analysis target region is arbitrarily defined by an operator operating the device of this embodiment, and indicates a region for acquiring the number of mobile terminals existing in the analysis target region, that is, population statistic information.

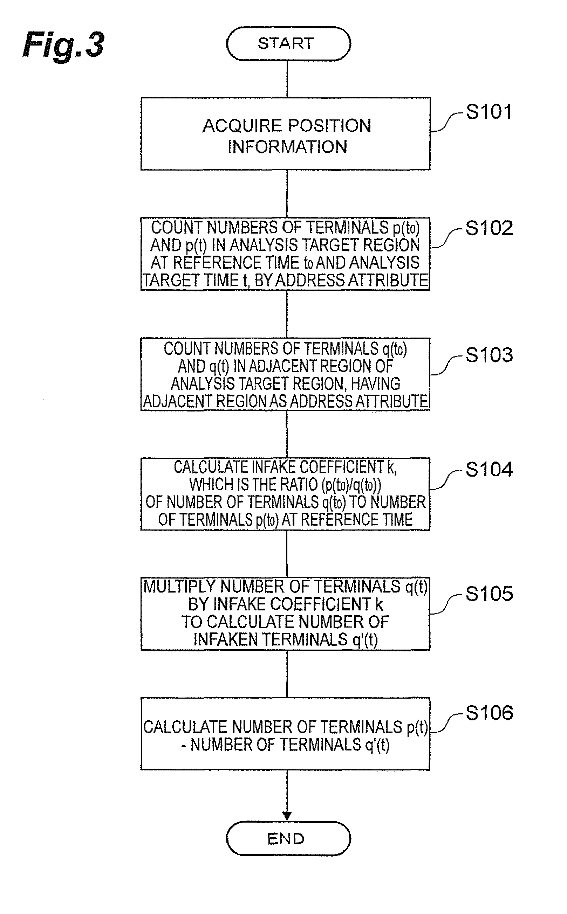

Processing by an information processing device 100 configured in this way is explained. Fig. 3 is a flowchart showing processing by the information processing device 100.

Position information is acquired by the position information acquisition portion 101 and stored in the position information DB 106 (S101). Then, the numbers of mobile terminals $p_n(t0)$ and $p_n(t)$ by address attribute n of the analysis target region p, at a reference time t0 and at an analysis target time t, are counted by the terminal counting portion 102 (S102). Further, the numbers of mobile terminals $q_n(t)$ and $q_n(t_0)$ in an adjacent region q of the analysis target region p of which address attribute is the adjacent region q are counted (S103).

Then, the intake coefficient $k_n$ is calculated by the intake coefficient calculation portion 103, based on the number of mobile terminals $p_n(t_0)$ and the number of mobile terminals $q_n(t_0)$ at the reference time t0 (S104). The intake coefficient $k_n$ calculated by the intake coefficient calculation portion 104 is multiplied by the number of mobile terminals $q_n(t)$ to calculate the number of intaked terminals $q_n'(t)$ (S105). And, the estimated terminal calculation means 105 calculates the number of mobile terminals $p_n(t)$ minus the number of mobile terminals $q_n'(t)$, to calculate the number of mobile terminals $p_n(t)$ in the analysis target region, taking into account the intake phenomenon (S106). When this calculation is performed by address attribute n, the processing is repeated for the address attributes n.

In S105, by causing an output portion (not shown) to add and output the number of intaked terminals $q_n'(t)$ and the number of mobile terminals in an adjacent region (for example, region M) of which address attribute is the adjacent region, the number of mobile terminals in the adjacent region (region M) at the analysis target time can be calculated by address attribute. Details relating to the addition  processing are as described below in the modified example of the first embodiment.

Next, the advantageous results of action of the information processing device 100 of the first embodiment are explained. Based on the position information acquired by the position information acquisition portion 101, the terminal counting portion 102 counts the numbers of position information pieces $p(t)$ and $p(t_0)$ of mobile terminals in the analysis target region p of which address attribute is the adjacent region q adjacent to the analysis target region p at the reference time t0 and the analysis target time t.

Further, the terminal counting portion 102 counts the numbers of position information pieces $q(t)$ and $q(t_0)$ for mobile terminals in the adjacent region q, of which address attribute is the adjacent region q at the reference time $t_0$ and at the analysis target time t. And, the intake coefficient calculation portion 103 calculates the intake coefficient k from the ratio of the number of position information pieces $p(t_0)$ for the analysis target region p at the counted reference time t0 and the number of position information pieces $q(t_0)$ for the adjacent region q at the counted reference time to. The intaked terminal calculation portion 104 then multiplies the number of position information pieces $q(t)$ counted at the analysis target time t by the calculated intake coefficient k to calculate the number of intaked terminals $q'(t)$, subtracts the number of intaked terminals $q'(t)$ from the number of position information pieces $p(t)$ at the analysis target time t, and calculates the number of mobile terminals. By this means, the number of mobile terminals can be counted taking the intake  phenomenon into account, and the number of mobile terminals in an analysis target region of which address attribute is an adjacent region can be more accurately counted.

Modified Example of the First Embodiment

In the above-described first embodiment, among the mobile terminals in the analysis target region p, an attempt was made to accurately determine the number of mobile terminals of which address attribute is an adjacent region q. On the other hand, in the present embodiment an attempt is made to accurately determine the number of mobile terminals in the analysis target region p, and which have as an address attribute the analysis target region p. Similarly to the above explanation, the intake phenomenon also has an effect on the number of mobile terminals counted in the adjacent region q. That is, the number of mobile terminals in the adjacent region q and of which address attribute is the analysis target region p includes the number of intaked terminals in the adjacent region q and intaked from the analysis target region p. From the perspective of the number of mobile terminals in the analysis target region p, this is the "number of intaked terminals", and by returning the number of intaked terminals, the number of mobile terminals in the analysis target region p of which address attribute is the analysis target region p can be accurately determined. Below, this concept is explained in detail.

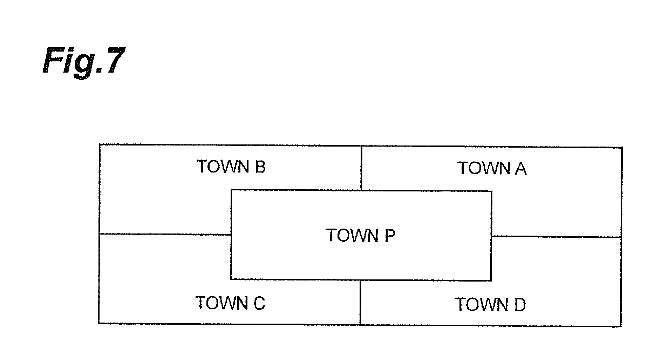

Fig. 7 explains the relation between the analysis target region p and the adjacent region q. Here the town P is established as the analysis target region p, and the towns A, B, C and D are established as adjacent regions q. The numbers of mobile terminals in  town P of which address attribute is the town P which is the analysis target region p, at a reference time to and at an analysis target time t, are $P_P(t_0)$ and $P_P(t)$, and similarly, the numbers of mobile terminals in town P of which address attribute is the town A at the reference time to and at the analysis target time t are $P_A(t_0)$ and $P_A(t)$. Below, the numbers of mobile terminals of which address attribute is the towns B to D are likewise taken to be $P_B(t_0)$ and $P_B(t)$ to $P_D(t_0)$ and $P_D(t)$ respectively.

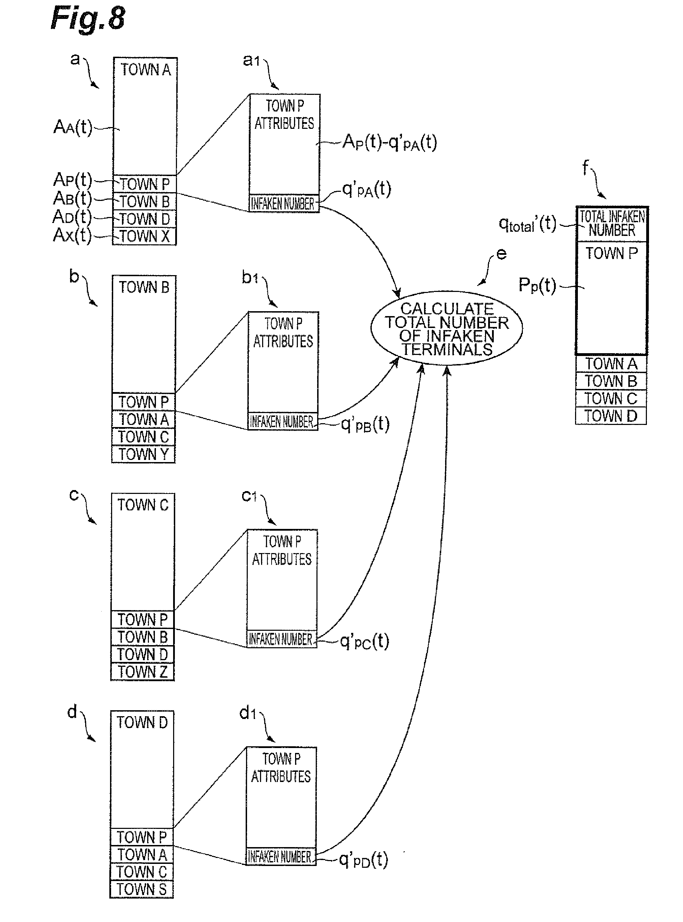

Fig. 8 is a conceptual diagram showing the process of calculating the number of intaked terminals $q'(t)$ in adjacent regions q of which address attribute is an analysis target region p. The symbols a to d in Fig. 8 indicate the distribution of the number of mobile terminals at the analysis target time t for each of the address attributes in adjacent regions q (A to D). The distribution diagram indicated by the symbol a shows the distribution of the numbers of mobile terminals in town A of which address attribute is town A, town P, town B, town D, and town X. Town X is not shown in Fig. 7, but is taken to be a region adjacent to town A. The same is true for towns Y, Z and S below.

As shown in the distribution diagram for symbol a, in town A, which is an adjacent region, there exist mobile terminals in the number $A_A(t)$ which have as an address attribute the town A, and mobile terminals in the numbers $A_P(t)$ to $A_X(t)$ which have as an address attribute the regions adjacent to town A (towns P, B, D and X).

The distribution diagram in town P shows that the mobile terminals include intaked terminals among mobile terminals in town A of which address attribute is town P, as further indicated by the symbol a1. Among the mobile terminals in town A of which address attribute is town P, the number of intaked terminals $q_{pA}'(t)$ intaked from town P is calculated as in the above-described first embodiment. That is, calculation is possible by multiplying the intake coefficient k by $P_p(t)$. The detailed processing is explained using a flowchart described below.

A second intake coefficient k2, described below, can also be applied. That is, calculation is possible by multiplying $A_p(t_0)$ by the second intake coefficient k2. Detailed processing is explained below.

By performing similar calculations for the adjacent regions which are towns B to D, the numbers of intaked terminals $q_{pB}'(t)$ to $q_pD'(t)$ intaked from town P for each of the adjacent regions can be calculated. By totaling these, the total number of intaked terminals $q_{total}'(t)$ intaked from town P can be calculated (symbol e). And as indicated in the distribution diagram with symbol f, by adding the total number of intaked terminals $q_{total}'(t)$ to the number of mobile terminals $P_p(t)$ in town P of which address attribute is the town P, the number of mobile terminals existing in town P and having town P as an address attribute can be accurately determined.

By subtracting $q_{pA}'(t)$ from Ap(t), the number of mobile terminals in town A with the P town attribute can be correctly determined. The same is true of the numbers of mobile terminals in each of the adjacent regions with the P town attribute. By subtracting the "number of intaked terminals" from the "count-targeted region", and adding to the "count-non-targeted region", the number of terminals in each region can be accurately determined by address attribute (the error arising from the intake phenomenon can be alleviated). The towns A to D in the symbol f in Fig. 8 are the results of subtracting the numbers of intaked terminals, determined in the above-described first embodiment, which are the numbers of mobile terminals in the analysis target region at the analysis target time of which address attribute is a region adjacent to the analysis target region.

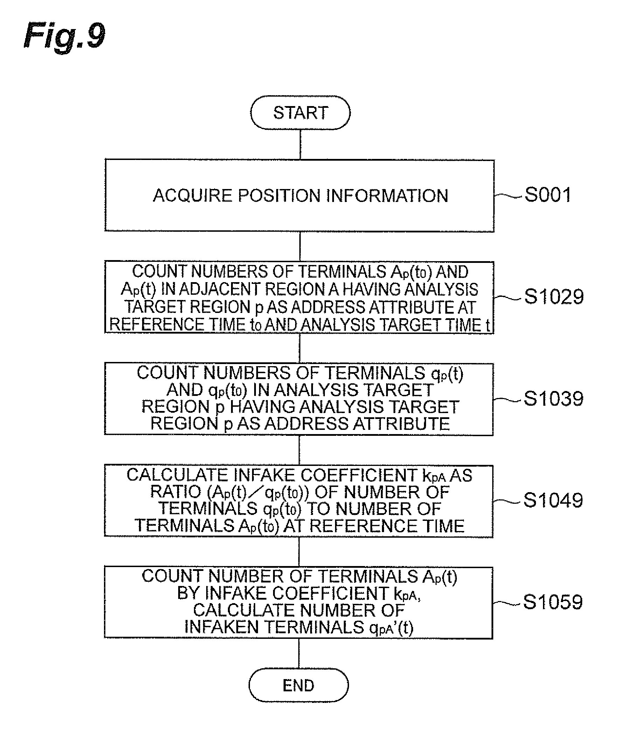

Next, a flowchart is used to further explain the above-described processing. Fig. 9 is a flowchart of the information processing device 100 in the present modified example of the embodiment. This flowchart is for processing for the region A adjacent to the analysis target region p, but similar processing is performed for the adjacent regions B to D.

First, the position information acquisition portion 101 acquires position information for mobile terminals in town A, and stores the information, by acquisition time, in the position information DB 106 (S101). Next, the terminal counting portion 102 calculates the numbers of mobile terminals $A_p(t_0)$ and $A_p(t)$ at the reference time to and at the analysis target time t in town A, which is an adjacent region, of which address attribute is the town P (S102a). The terminal counting portion 102 counts the number of mobile terminals Pp(t) of which address attribute is the town P, which is the analysis target region p to which the town A is adjacent (S 103a).

Next, the intake coefficient calculation portion 103 calculates the intake coefficient $k_{pA}$, which is the ratio ($A_p(t_0)/P_p(t_0)$) of the number of mobile terminals $P_p(t_0)$ to the number of mobile terminals $A_p(t_0)$ at the reference time to (S 104a). This intake coefficient $k_{pA}$ is a coefficient for terminals in the adjacent region A and intaked from the town P; intake coefficients are calculated for each pair of regions. By multiplying the number of mobile terminals $P_p(t)$ by the intake coefficient $k_{pA}$, the intaked terminal calculation portion 104 calculates the number of intaked terminals $q_{pA}'(t)$ (S105a).

As stated in the first embodiment, a second intake coefficient k2 may be used to calculate the number of intaked terminals. That is, the intake coefficient calculation portion 103 calculates the second intake coefficient $k2_{pA}$, which is the ratio ($P_p(t)/P_p(t_0)$) of the number of mobile terminals $P_p(t_0)$ at reference time to to the number of mobile terminals $P_p(t)$ at the analysis target time t (S104a). This second intake coefficient $k2_{pA}$ is a coefficient for terminals in the adjacent region A intaked from town P; intake coefficients are calculated for each pair of regions. By multiplying the number of mobile terminals $A_p(t_0)$ by the intake coefficient $k2_{pA}$, the intaked terminal calculation portion 104 calculates the number of intaked terminals $q_{pA}'(t)$ (S105a).

In this way, the number of intaked terminals $q_{pA}'(t)$ in town A (adjacent region A), intaked from town P, can be calculated. Similar processing is performed for towns B to D, intake coefficients $k_{pB}$ to $k_{pD}$ are calculated, and the numbers of intaked terminals $q_{pB}'(t)$ to $q_{pD}'(t)$ in the respective regions which are intaked from town P are calculated.

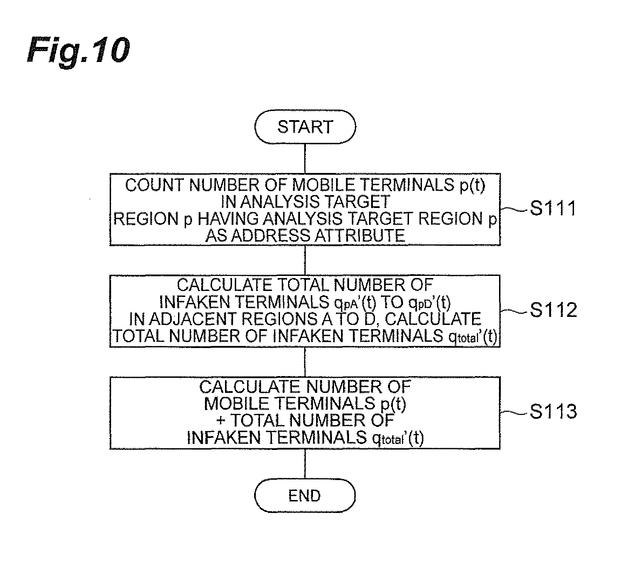

Next, the numbers of intaked terminals $q_{pA}'(t)$ to $q_{pD}'(t)$, each intaked from town P, must be added to the number of mobile terminals p(t) in town P, which is the analysis target region p, of which address attribute is the town P. Fig. 10 is a flowchart showing this processing. First, the terminal counting portion 102 counts the number of mobile terminals $p_p(t)$ in town P which is the analysis target region p and of which address attribute is the town P (S111). As in the description of the first embodiment, if the intaked portion for town P is subtracted from the adjacent regions, the precision is further improved. The estimated terminal calculation means 105 then calculates the total number of intaked terminals $q_{total}'(t)$ by totaling the numbers of intaked terminals $q_{pA}'(t)$ to $q_{pD}'(t)$ in each of the adjacent regions A to D from town P, as described above (S112). Then, the estimated terminal calculation means 105 adds the number of mobile terminals p(t) and the total number of intaked terminals $q_{total}'(t)$ (S113). In this way, the number of mobile terminals in the town P and of which address attribute is the town P can be calculated accurately, taking the intake phenomenon into account.

In the information processing device 100 in this modified example, the position information acquisition portion 101 acquires position information for mobile terminals in a counting target region which is a counting unit for the position information of mobile terminals, and address attribute information for the mobile terminals. And, the terminal counting portion 102 counts the number of mobile terminals in an analysis target region p which is a region specified in advance, based on position information for mobile terminals of which address attribute is the analysis target region p, at a reference time t0 and at an analysis target time t based on the position information acquired by the position information acquisition portion 101.

Further, based on position information for mobile terminals of which address attribute is the analysis target region p, at the reference time and at the analysis target time, the terminal counting portion 102 counts, by the adjacent regions A to D, the numbers of mobile terminals in the adjacent regions adjacent to the analysis target region p based on the position information acquired by the position information acquisition portion 101.

The intake coefficient calculation portion 103 then calculates intake coefficients for each of the adjacent regions A to D from the ratio of the number of mobile terminals of the analysis target region p at the reference time $t_0$, counted by the terminal counting portion 102, to the number of mobile terminals in the adjacent region at the reference time $t_0$, counted by the terminal counting portion 102.

The intaked terminal calculation portion 104 multiplies the number of mobile terminals at the analysis target time t counted by the terminal counting portion 102 by the intake coefficients $k_{pa}$ to $k_{pd}$ for the respective adjacent regions A to D calculated by the intake coefficient calculation portion 103, to calculate the numbers of intaked terminals $q_{pA}'(t)$ to $q_{pD}'(t)$ for each of the adjacent regions A to D.

Then, the estimated terminal calculation means 105 adds to the number of mobile terminals p(t) counted by the terminal counting portion 102 the total number of intaked terminals $q_{total}'(t)$, obtained by totaling the numbers of intaked terminals $q_{pA}'(t)$ to $q_{pD}'(t)$ for the adjacent regions A to D calculated by the intaked terminal calculation portion 104, to calculate the estimated number of mobile terminals.

By this means, the number of mobile terminals in the analysis target region p can be calculated accurately, taking the intake phenomenon into consideration.


Second Embodiment

Next, a second embodiment is explained. In the second embodiment an attempt is made to calculate the number of mobile terminals by address attribute of an analysis target region, based on unit regions for position information counting (sector) completely comprehended within the analysis target region.

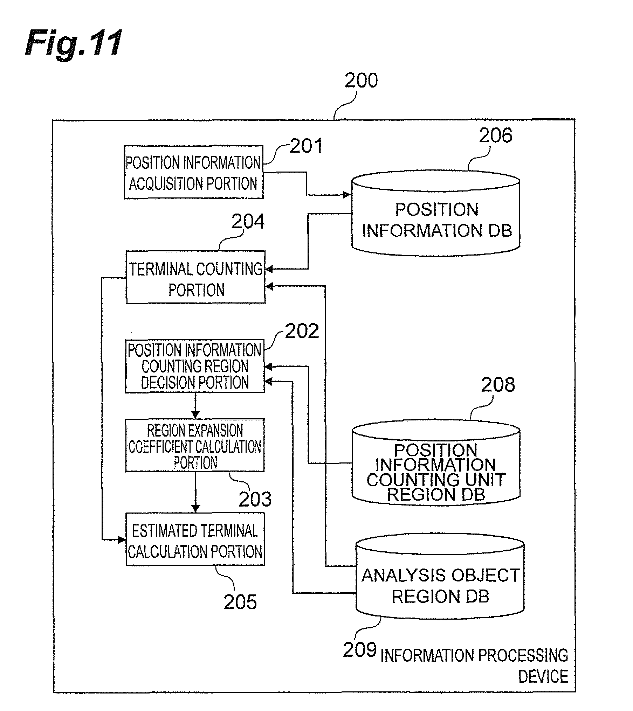

Fig. 11 is a block diagram showing the functional configuration of the information processing device 200 of the second embodiment. As shown in Fig. 11, the information processing device 200 comprises a position information acquisition portion 201, position information counting region decision portion 202 (decision means), region expansion coefficient calculation portion 203 (expansion coefficient calculation means), terminal counting portion 204 (counting means), estimated terminal calculation portion 205 (calculation means), position information DB 206, position information counting unit region DB 208, and analysis target region DB 209. Similarly to the information processing device 100 of the first embodiment, this information processing device 200 is realized by the hardware configuration shown in Fig. 2. Below, constituent elements are explained.

The position information acquisition portion 201 is a portion which acquires position information for mobile terminals, and acquires position information in an analysis target region, together with the address attributes, from a position information management server which stores location position information being stored by a communication carrier enterprise. From the standpoint of privacy, information which identifies users is not acquired, and only information sufficient to determine attributes is acquired. The position information and address attribute information acquired by the position information acquisition portion 201 is stored in the position information DB 206.

The position information counting region decision portion 202 is a portion which decides, as position information counting regions, position information counting unit regions comprehended by an analysis target region specified by an operator. That is, the position information counting region decision portion 202 decides one or a plurality of position information counting regions comprehended by the analysis target region based on a database for specifying analysis target regions stored in the analysis target region DB 209, and a database for specifying position information counting unit regions stored in the position information counting unit region DB 208.

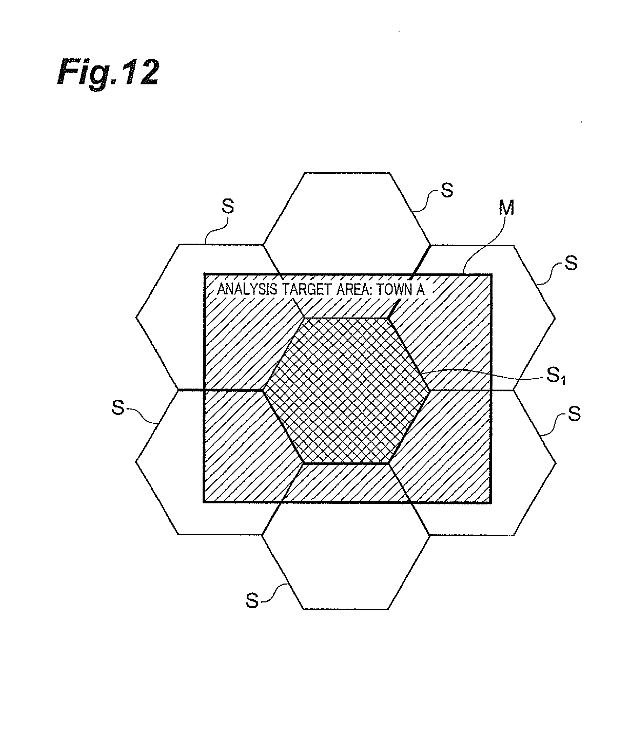

A specific example is shown in Fig. 12. Fig. 12 explains the relation between an analysis target region M and position information counting unit regions S. As shown in Fig. 12, the analysis target region M is for example a region forming a rectangle. On the other hand, position information counting unit regions S are regions forming hexagonal shapes, and are regions specified by sectors in this embodiment. In general, position information counting unit regions S are formed to be smaller than analysis target regions M. Hence there are cases in which a position information counting unit region S is comprehended within an analysis target region M, and in the example of Fig. 12, the position information counting unit region S1 is a comprehended region. Position information counting unit regions S are shown as hexagonal shapes for convenience, but may be other shapes as well.

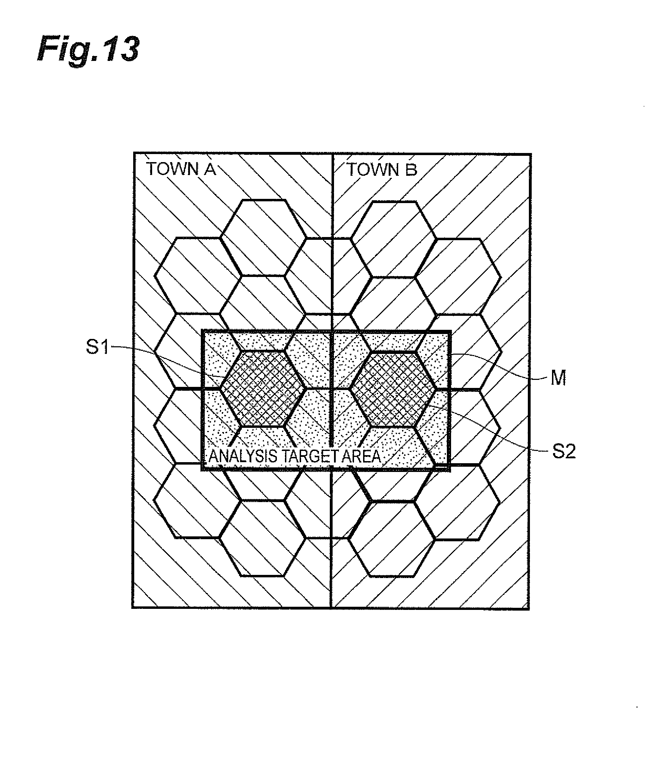

Fig. 13 shows another example. Fig. 13 explains the relation between an analysis target region M and position information counting unit regions S1 and S2. As shown in Fig. 13, there are cases in which the analysis target region M includes a plurality of position information counting unit regions S1 and S2. In this embodiment, position information counting unit regions which are completely comprehended by both the analysis target region M, and regions classified by address codes (the town A portion and town B portion in Fig. 13) are taken to be position information counting regions. As explained below, expansion coefficients are calculated by classification into the town A portion (MA) and the town B portion (MB) of the analysis target region M, and calculating area ratios of the position information counting unit regions S1 and S2 for each.

The region expansion coefficient calculation portion 203 is a portion which calculates region expansion coefficients based on the ratio of the area of the analysis target region to the area of a position information counting unit region, and calculates a region expansion coefficient by dividing an analysis target region by a position information counting unit region. In the example of Fig. 12, the area ratio obtained by dividing the analysis target region M by the position information counting unit region S1 (that is, the area of the analysis target region M divided by the area of the position information counting unit region S1) is the region expansion coefficient, and in the example of Fig. 13, the area ratio obtained by dividing the town A portion in the analysis target region M by the position information counting unit region S1 (MA/S1), and the area ratio obtained by dividing the town B portion by the position information counting unit region S2 (MB/S2), are region expansion coefficients. Further, in the case of Fig. 13, region expansion coefficients may be calculated based on calculation of the area ratio of the analysis target region M and the total of the position information counting unit regions S1 and S2.

The terminal counting portion 204 is a portion which counts the number of mobile terminals located in a position information counting region decided by the position information counting region decision portion 202 at the analysis target time. Specifically, the terminal counting portion 204 can determine the numbers of mobile terminals, by address attribute, by counting the position information for each terminal stored in the position information DB 206 by address attribute. The analysis target time indicates the time slot for counting of the number of mobile terminals, and is a time slot specified by the operator or the enterprise performing statistical processing. In general, the number of mobile terminals differs depending on the analysis target time, and when trends in the number of mobile terminals are known, the number of mobile terminals must be counted with the analysis target time changed.

The estimated terminal calculation portion 205 multiplies the number of mobile terminals in a position information counting region counted by the terminal counting portion 204, by address attribute, and the expansion coefficients calculated by the region expansion coefficient calculation portion 203, to calculate an estimated number of mobile terminals in the analysis target region by address attribute.

The position information DB 206 is a portion which stores position information acquired by the position information acquisition portion 201, and stores position information for each mobile terminal, in association with at least information on the time of acquisition and an address attribute. For example, the information shown in Fig. 4 is stored.

The position information counting unit region DB 208 is a portion which stores information to form position information counting unit regions.

The analysis target region DB 209 is a portion which stores information to form analysis target regions. This analysis target region DB 209 is a portion which stores information to specify regions formed in a mesh shape, and regions specified by an address code or similar (regions classified into cities, towns and villages, or similar).

By configuring the information processing device 200 in this way, position information for mobile terminals that may exist on the outer edge portions of an analysis target region is not acquired, but instead, position information for mobile terminals in completely comprehended position information counting regions is acquired, so that the number of mobile terminals can be counted with the intake phenomenon from adjacent regions adjacent to the analysis target region excluded.

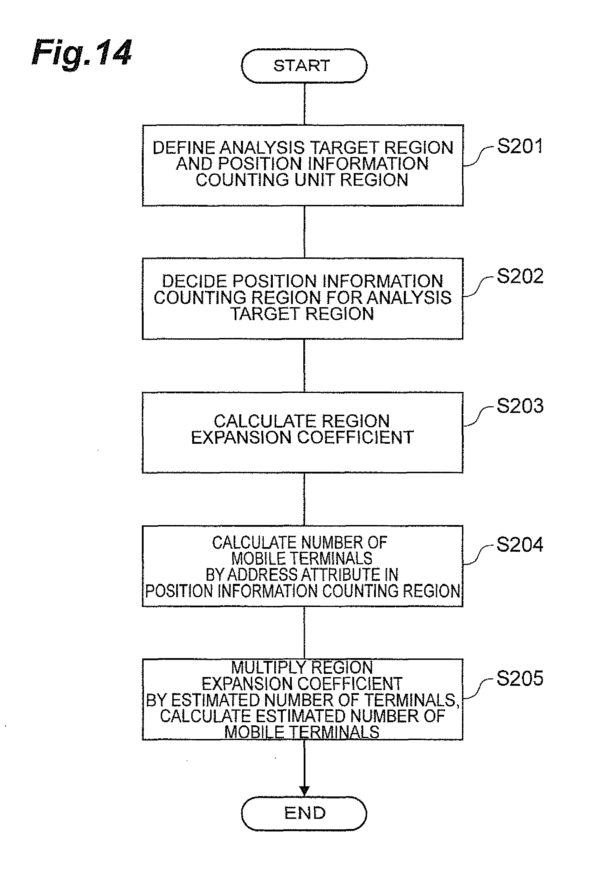

Next, processing of this information processing device 200 is explained. Fig. 14 is a flowchart showing processing of the information processing device 200. In the information processing device 200, an analysis target region and position information counting unit regions are defined in the position information counting unit region DB 208 and in the analysis target region DB 209 (S201).

Then, the position information counting region decision portion 202 decides a position information counting region, which is a position information counting unit region comprehended by the analysis target region (S202), and based on the area ratio of the analysis target region and the position information counting region thus decided, the region expansion coefficient calculation portion 203 calculates a region expansion coefficient (S103).

The terminal counting portion 204 calculates an estimated number of mobile terminals by address attribute in the position information counting region decided by the position information counting region decision portion 202 (S204). Then, the estimated terminal calculation portion 205 multiplies the estimated number of mobile terminals by the region expansion coefficient calculated by the region expansion coefficient calculation portion 203, and calculates an estimated number of mobile terminals in the analysis target region (S205).

In this way, by counting the number of mobile terminals so as not to count mobile terminals in an adjacent region which are to be counted near a boundary line of the adjacent region with the analysis target region (an outer edge portion of the adjacent region), the error due to the intake phenomenon can be reduced.

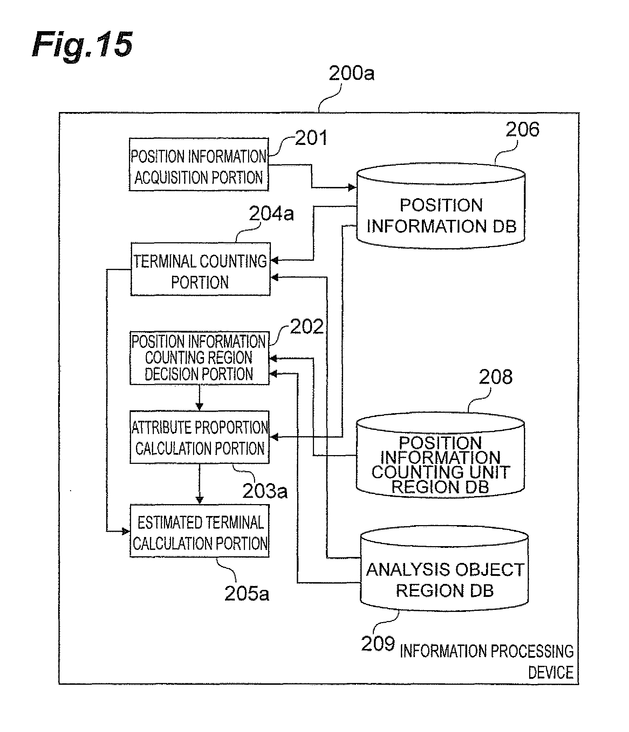

Next, a modified example of this second embodiment is explained. Fig. 15 is a block diagram showing functions of the information processing device 200a in the modified example. The information processing device 200a comprises a position information acquisition portion 201, position information counting region decision portion 202 (decision means), attribute proportion calculation portion 203a (address attribute ratio calculation means), terminal counting portion 204a (mobile terminal calculation means), estimated terminal calculation portion 205a (attribute-specific mobile terminal calculation means), position information DB 206, position information counting unit region DB 208, and analysis target region DB 209. Below, differences with the information processing device 200 are explained.

The terminal counting portion 204a is a portion which counts the number of all mobile terminals in an analysis target region. Whereas the terminal counting portion 204 counts the number of mobile terminals by address attribute in a position information counting region, the terminal counting portion 204a differs in that the number of mobile terminals in the analysis target region is counted. A further difference is that counting is not performed with division by address attributes in particular.

In greater detail, the terminal counting portion 204a calculates the number of mobile terminals in an analysis target region based on the area ratio of the analysis target region to a plurality of overlapping position information counting unit regions. That is, the analysis target region overlaps with all of or a portion of a plurality of position information counting unit regions; the area ratios with the plurality of position information counting unit regions can be calculated, the number of mobile terminals in each of the position information counting unit regions multiplied by the area ratio thereof, and the results totaled, so that the number of mobile terminals in the analysis target region can be calculated.

The attribute proportion calculation portion 203a is a portion which calculates the proportion, by address attribute, of the number of mobile terminals in a position information counting region completely comprehended by the analysis target region, decided by the position information counting region decision portion 202. That is, the attribute proportion calculation portion 203a derives address attributes of mobile terminals located in a position information counting region based on position information for the mobile terminals stored in the position information DB 206, and calculates the proportions thereof. When a plurality of position information counting unit regions are comprehended by the analysis target region, the attribute proportion calculation portion 203a counts the number of mobile terminals in each of the position information counting unit regions, and calculates the proportions by address attribute from the total.

The estimated terminal calculation portion 205a is a portion which multiples the proportion of a mobile terminal address attribute in a position information counting region calculated by the attribute proportion calculation portion 203a and the number of mobile terminals in the analysis target region calculated by the terminal counting portion 204a, to calculate an estimated number of mobile terminals by address attribute in the analysis target region.

In this way, proportions are calculated by the address attribute of mobile terminals in a position information counting unit region, the number of all mobile terminals in the analysis target region is calculated, and by multiplying these together, the number of mobile terminals in the analysis target region can be calculated by address attribute.

The counting time for mobile terminals in the terminal counting portion 204a and the calculation time for calculating proportions by address attribute in the attribute proportion calculation portion 203a must be made, by the operator or the enterprise performing the statistical processing, to coincide with the specified analysis target time. The number of mobile terminals and attribute proportion during the counting time each vary with time.

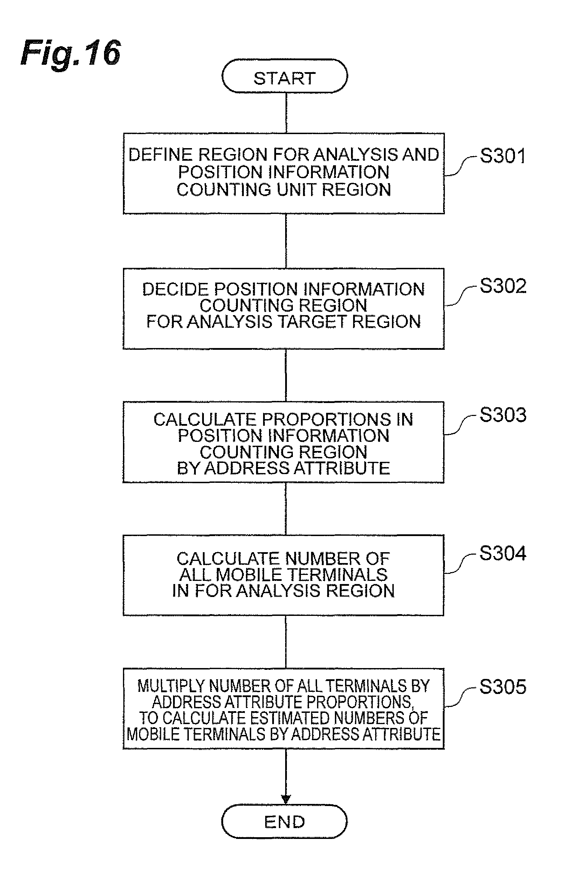

Next, processing of the information processing device 200a in the modified example is explained. Fig. 16 is a flowchart showing processing of the information processing device 200a.

The analysis target region and position information counting unit region are defined and stored in the position information DB 206 (S301). The position information counting region decision portion 202 selects, as a position information counting region, a position information counting unit region comprehended within the analysis target region (S302). Then, the attribute proportion calculation portion 203a calculates proportions by address attribute in the position information counting region (S303). When a plurality of position information counting regions are comprehended within the analysis target region, proportions are calculated by address attribute from the total number of mobile terminals in the position information counting regions.

The terminal counting portion 204a calculates the number of mobile terminals in the analysis target region (S304). And, the estimated terminal calculation portion 205a multiplies the number of mobile terminals in the analysis target region by the proportions by address attribute calculated by the attribute proportion calculation portion 203 a, to calculate the estimated numbers of mobile terminals by address attribute (S305).

Next, the advantageous results of action of the information processing device 200 of the second embodiment, and of the information processing device 200a of the modified example thereof, are explained.

By means of the information processing device 200 of this embodiment, the position information counting region decision portion 202 decides a position information counting region S1, which is a position information counting unit comprehended by the analysis target region M (see Fig. 12). The region expansion coefficient calculation portion 203 calculates a region expansion coefficient from the area ratio of the analysis target region M to the decided position information counting region. And, the terminal counting portion 204 counts the number of mobile terminals, by address attribute, located in the position information counting region S1, and the estimated terminal calculation portion 205 multiplies the number of mobile terminals counted by address attribute and the calculated region expansion coefficient, to calculate the expanded number of mobile terminals. As a result, the number of mobile terminals in an adjacent region which are to be counted near a boundary line of the adjacent region with the analysis target region (the outer edge portion of the adjacent region) are not counted, so that terminals resulting from the intake phenomenon are excluded, and the number of mobile terminals can be counted accurately.

Further, by means of the information processing device 200a of the modified example, the position information counting region decision portion 202 decides a position information counting region S1 which is a position information counting unit comprehended by the analysis target region (see Fig. 12). The attribute proportion calculation portion 203 a calculates the ratios of address attributes in the decided position information counting region S1. Then, the terminal counting portion 204a calculates the number of mobile terminals in the analysis target region M, and the estimated terminal calculation portion 205a multiplies the number of mobile terminals in the analysis target region M by one address attribute ratio in the position information counting region S1, and calculates an estimated number of mobile terminals for the one address attribute in the analysis target region M. By this means, the number of mobile terminals in an adjacent region which are to be counted near a boundary line of the adjacent region with the analysis target region (an outer edge portion of the adjacent region) is not counted, and terminals due to the intake phenomenon can be excluded from counting, so that the number of mobile terminals can be counted accurately.

Third Embodiment

In the above-described first and second embodiments, the number of mobile terminals was counted by counting position information. However, there can be cases in which the number of mobile terminals cannot be accurately counted merely by counting the number of position information pieces.

For example, consider estimation of the number of terminals using a position registration signal as the position information. If it can be hypothesized that position registration signals are transmitted perfectly periodically, then the number of position registration signals received within a fixed observation time in a certain sector is proportional to the number of terminals in the sector. However, in actuality position registration signals, although as a rule transmitted periodically by a timer within portable telephones for example, may be transmitted regardless of the timer state upon occasions in which certain specific base station sectors are spanned, and transmission may be delayed due to conversations, the effects of being out of range, and similar. The same is true of GPS information, and the period of transmission and reception is not constant due to being out of range, terminal operations, and various other influences.

Hence in order to precisely estimate the number of terminals, rather than merely counting the number of received signals, fluctuations in the interval of reception of signals must also be taken into account.

In this third embodiment, when estimating the number of terminals using position information, the number of mobile terminals is precisely estimated while taking into account the influence imparted by fluctuation in the reception interval.

Below, processing to achieve this is explained. In this embodiment, by determining the temporal proportion with which one mobile terminal is located in a certain analysis target region, it is possible to differentiate whether one position information item is to be counted as one item, or is to be counted as a smaller value (for example, 0.5 item), and to count items accordingly.

For example, by performing the following processing, the terminal counting portion 102 of the information processing device 100 of the first embodiment (or the terminal counting portion 204 (or 204a) in the information processing device 200 or 200a of the second embodiment), can count the number of mobile terminals in a position information counting unit region (sector unit), and using this, can count the number of mobile terminals in an analysis target region and in an adjacent region. Methods are not limited to that explained below, and any method may be used in which the number of mobile terminals is calculated based on position information; if the method enables calculation of the located proportion taking the time in the region into account, the method need not be limited to the following method.

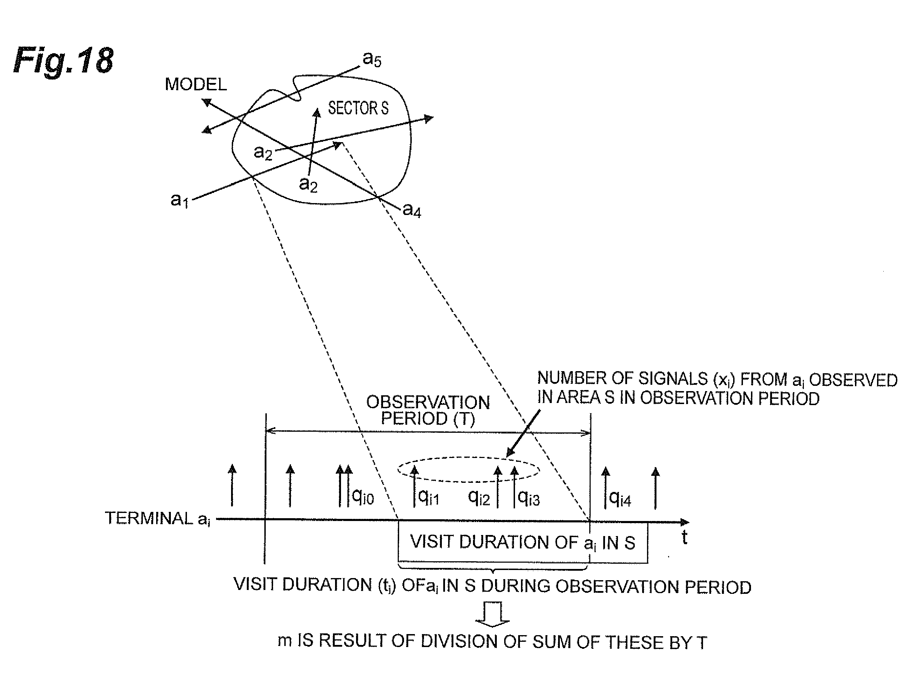

Suppose that, as in the model shown in Fig. 18, n terminals $a_1$, $a_2$, ..., $a_n$ pass through a sector S during a certain observation period (of length T), and the visit duration of each terminal $a_i$ in the sector S within the observation period is $t_i$ ($0 < t_i \leq T$). Then the number of terminals m existing in the sector S (in actuality, the average value of the number of terminals m existing in the sector S within the observation period) is expressed by the following equation (1a).

[E 1]

$$m = \sum_{i=1}^{n} t_i / T \qquad (1a)$$

That is, the result of dividing the sum of the visit duration $t_i$ of the terminals $a_i$ in the sector S within the observation period by the observation period length T is an estimate of the number of terminals m. However, the true values of the visit duration $t_i$ of the terminals $a_i$ in the sector S within the observation period cannot be observed; but the terminals $a_i$ emit signals (for example, position registration signals), and these signals can be observed.

If signals emitted by a terminal $a_i$ in the sector S within the observation period are, in temporal order,

[E 2]

$$q_{i1}, q_{i2}, \ldots, q_{ix_i} \tag{2}$$

(where $x_i$ is the sum of the signals emitted by a terminal $a_i$ in the sector S within the observation period), then an estimate of the number of terminals is just an estimate of the value of m from the observed signals $q_{ij}$ (where j is an integer equal to or greater than 1 and equal to or less than xi).

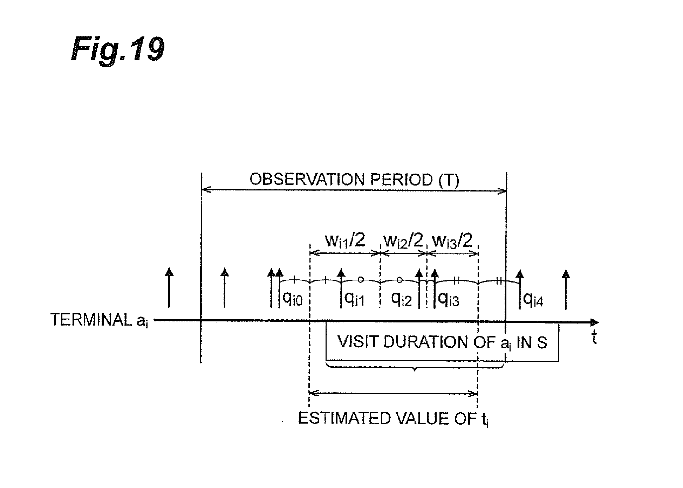

A method of calculating an estimate of the number of terminals is explained based on Fig. 19. Let $p_i$ be the density (that is, the number of signals per unit time) at which signals $q_{ij}$ are transmitted from a terminal $a_i$. At this time, if the probability with which a signal is transmitted is independent of the sector, then because the expectation value $E(x_i)$ of the sum $x_i$ of the signals emitted by the terminal $a_i$ in sector S within the observation period is $E(x_i) = t_i \times p_i$, the following equation (2a) obtains for the expectation value $E(t_i)$ of the visit duration $t_i$ of the terminal $a_i$ in the sector S within the observation period.

$$E(t_i) = x_i/p_i \tag{2a}$$

Here, if $u_{ij}$ is the time of transmission of a signal $q_{ij}$, then the density $p_{ij}$ of the signal $q_{ij}$ is given by equation (3a) below.

$$p_{ij} = 2/(u_{i(j+1)} - u_{i(j-1)}) \tag{3a}$$

Here, if the signal $q_{ij}$ is a signal for first position data, then the signal $q_{i(j-1)}$ is a signal for second position data, and the signal $q_{i(j+1)}$ is a signal for third position data. In this embodiment, the difference between the transmission time $u_{i(j-1)}$ of the signal $q_{i(j-1)}$ for the second position data and the transmission time $u_{i(j+1)}$ of the signal $q_{i(j+1)}$ for the third position data, that is, the quantity $(u_{i(j+1)} - u_{i(j-1)})$ in the above equation (3a), is taken to be the characteristic quantity $w_{ij}$ for the first position data. Hence the above equation (3a) becomes as follows.

$$p_{ij} = 2/(u_{i(j+1)} - u_{i(j-1)}) = 2/w_{ij} \tag{4a}$$

The density $p_i$ at this time is given by

[E 3]

$$p_i = x_i / E(t_i) = (x_i / \sum_{j=1}^{x_i} W_{ij}) \times 2 \tag{5a}.$$

Hence the estimated value $E(m)$ for the number of terminals m can be calculated using equation (6a) below.

[E 4]

$$E(m) = (\sum_{i=1}^{n} \sum_{j=1}^{x_i} (w_{ij}/2))/T = (\sum_{i=1}^{n} \sum_{j=1}^{x_i} w_{ij})/2T \tag{6a}$$

As shown in the example of Fig. 19, if within the observation period and moreover within the period in which the terminal $a_i$ dwells in the sector S, the terminal $a_i$ transmits the signals $q_{i1}$, $q_{i2}$, $q_{i3}$, and immediately before the signal $q_{i1}$ transmits the signal $q_{i0}$, and immediately after the signal $qi_3$ transmits the signal $q_{i4}$, and if the transmission times of the signals $q_{i0}$, $q_{i1}$, $q_{i2}$, $q_{i3}$, $q_{i4}$ are respectively $u_{i0}$, $u_{i1}$, $u_{i2}$, $u_{i3}$, $u_{i4}$, then the above-described approach corresponds to estimating the visit duration $t_i$ of a terminal $a_i$ in the sector S within the observation period as the period from (the midpoint between $u_{i0}$ and $u_{i1}$) to (the midpoint between $u_{i3}$ and $u_{i4}$). A terminal $a_i$ transmits the signal $q_{i4}$ while dwelling in the sector S, although not within the observation period. Even so, the end time of the visit duration $t_i$ is not estimated to be the same as the end time of the observation period T. In this way, the absence of bias in estimates of visit duration $t_i$ is maintained.

The information processing device 100, 200 or 200a may also comprise an attribute/expansion coefficient storage portion (expansion coefficient storage means) which stores address attributes by mobile terminal and expansion coefficients, by address attribute, determined in advance. A population calculation portion, not shown, calculates the population using the estimated number of mobile terminals output from the estimated terminal calculation portion 105 (or 205 or 205a). That is, the population calculation portion takes as a key an address attribute to read out expansion coefficients corresponding to address attributes from the attribute/expansion coefficient storage portion, and by multiplying these by the estimated number of mobile terminals, can calculate the population.

In place of the population calculation portion, the terminal counting portion 102 (or 204 or 204a) may count the results of multiplication by expansion coefficients corresponding to address attributes; in this case, the age or another attribute other than the address attributes is used to count the results of multiplication by the expansion coefficients by that attribute.

Further, as an example of the expansion coefficient, the reciprocal of the product of the location rate and the terminal adoption rate (that is, the ratio of the number located to the population) can be used. Here the "location rate" means the ratio of the number located to the number of contracted units, and the "adoption rate" means the ratio of the number of contracted units to the population. It is desirable, but not essential, that such an expansion coefficient be derived by the above-described population estimation units.

**Reference Signs List**

| | |
|---|---|
| 100 | Information processing device |
| 101 | Position information acquisition portion |
| 102 | Terminal counting portion |
| 103 | Intake coefficient calculation portion |
| 104 | Intaked terminal calculation portion |
| 105 | Estimated terminal calculation means |
| 106 | Position information DB |
| 108 | Analysis target region DB |
| 200 | Information processing device |
| 200a | Information processing device |
| 201 | Position information acquisition portion |
| 202 | Position information counting region decision portion |
| 203 | Region expansion coefficient calculation portion |
| 203a | Attribute proportion calculation portion |
| 204 | Terminal counting portion |
| 204a | Terminal counting portion |
| 205 | Estimated terminal calculation portion |
| 205a | Estimated terminal calculation portion |
| 206 | Position information DB |
| 208 | Position information counting unit region DB |
| 209 | Analysis target region DB |

**Claims**

**1.** An information processing device, comprising:

acquisition means for acquiring position information for mobile terminals in a counting target region that is a unit for counting mobile terminal position information, and address attribute information for the mobile terminals; region counting means for counting the number of mobile terminals in an analysis target region which is a region specified in advance, based on position information for mobile terminals of which address attribute is an adjacent region that is adjacent to the analysis target region, at a reference time and at an analysis target time based on the position information acquired by the acquisition means;

adjacent region counting means for counting the number of mobile terminals in the adjacent region based on position information for mobile terminals of which address attribute is the adjacent region, at the reference time and at the analysis target time based on the position information acquired by the acquisition means; and

intaken terminal calculation means for calculating the number of intaken terminals based on the number of mobile terminals in the analysis target region at the reference time counted by the region counting means, the number of mobile terminals in the adj acent region at the reference time counted by the adjacent region counting means, and the number of mobile terminals at the analysis target time counted by the adjacent region counting means.

2. The information processing device according to Claim 1, further comprising intake coefficient calculation means for calculating an intake coefficient from a ratio of the number of mobile terminals in the analysis target region at the reference time counted by the region counting means to the number of mobile terminals in the adjacent region at the reference time counted by the adjacent region counting means,
wherein the intaked terminal calculation means multiplies the number of mobile terminals at the analysis target time counted by the adjacent region counting means, by the intake coefficient calculated by the intake coefficient calculation means, to calculate the number of intaked terminals.

3. The information processing device according to Claim 1, further comprising intake coefficient calculation means for calculating a second intake coefficient from a ratio of the number of mobile terminals in the adjacent region at the reference time counted by the adjacent region counting means to the number of mobile terminals in the adjacent region at the analysis target time counted by the adjacent region counting means,
wherein the intaked terminal calculation means multiplies the number of mobile terminals at the reference time counted by the region counting means, by the second intake coefficient calculated by the second intake coefficient calculation means, to calculate the number of intaked terminals.

4. The information processing device according to any one of Claims 1 to 3, further comprising mobile terminal calculation means for subtracting the number of intaked terminals that is calculated by the intaked terminal calculation means, from the number of mobile terminals counted by the region counting means, to calculate an estimated number of mobile terminals.

5. The information processing device according to any one of Claims 1 to 4, further comprising output means for outputting the number of intaked terminals that is calculated by the intaked terminal calculation means such that the number of intaked terminals is added to the number of mobile terminals in an adjacent region that is adjacent to the analysis target region, the address attribute of the mobile terminals being the adjacent region.

6. An information processing device, comprising:

acquisition means for acquiring position information for mobile terminals in a counting target region that is a unit for counting mobile terminal position information, and address attribute information for the mobile terminals; region counting means for counting the number of mobile terminals, in an analysis target region which is a region specified in advance, based on position information for mobile terminals of which address attribute is an adjacent region that is adjacent to the analysis target region, at a reference time and at an analysis target time based on the position information acquired by the acquisition means;

adjacent region counting means for counting the number of mobile terminals in the adjacent region based on position information for mobile terminals of which address attribute is the adjacent region, at the reference time and at the analysis target time based on the position information acquired by the acquisition means;

intake coefficient calculation means for calculating an intake coefficient from a ratio of the number of mobile terminals in the analysis target region at the reference time counted by the region counting means to the number of mobile terminals in the adjacent region at the reference time counted by the adjacent region counting means; and

intaked terminal calculation means for multiplying the number of mobile terminals at the analysis target time counted by the adjacent region counting means, by the intake coefficient calculated by the intake coefficient calculation means, to calculate the number of intaked terminals.

**7.** An information processing device, comprising:

decision means for deciding, among position information counting unit regions which are counting units for position information, one or a plurality of position information counting unit regions included in an analysis target region which is a region specified in advance, as a position information counting region;

expansion coefficient calculation means for calculating a region expansion coefficient from an area ratio of the analysis target region to the position information counting region decided by the decision means;

counting means for counting, by address attribute, the number of mobile terminals located in the position information counting region decided by the decision means, based on position information; and

calculation means for multiplying the number of mobile terminals by address attribute counted by the counting means, by the region expansion coefficient calculated by the expansion coefficient calculation means, to calculate an estimated number of mobile terminals.

**8.** An information processing device, comprising:

decision means for deciding, among position information counting unit regions which are counting units for position information, one or a plurality of position information counting unit regions included in an analysis target region which is a region specified in advance, as a position information counting region;

address attribute ratio calculation means for calculating a ratio of address attributes of mobile terminals, in the position information counting region decided by the decision means;

mobile terminal calculation means for calculating the number of mobile terminals in the analysis target region based on position information; and

attribute-specific mobile terminal calculation means for multiplying the number of terminals calculated by the mobile terminal calculation means, by the ratio of one address attribute of the mobile terminals calculated by the address attribute ratio calculation means, to calculate an estimated number of mobile terminals for the one address attribute in the analysis target region.

**9.** A method for estimating the number of terminals, comprising:

an acquisition step of acquiring position information for mobile terminals in a counting target region that is a unit for counting mobile terminal position information, and address attribute information for the mobile terminals;

a region counting step of counting the number of mobile terminals in an analysis target region which is a region specified in advance, based on position information for mobile terminals of which address attribute is an adjacent region that is adjacent to the analysis target region, at a reference time and at an analysis target time based on the position information acquired in the acquisition step;

an adjacent region counting step of counting the number of mobile terminals in the adjacent region based on position information for mobile terminals of which address attribute is the adjacent region, at the reference time and at the analysis target time based on the position information acquired in the acquisition step; and

an intaked terminal calculation step of calculating the number of intaked terminals based on the number of mobile terminals in the analysis target region at the reference time counted in the region counting step, the number of mobile terminals in the adjacent region at the reference time counted in the adjacent region counting step, and the number of mobile terminals at the analysis target time counted in the adjacent region counting step.

**10.** A method for estimating the number of terminals, comprising:

an acquisition step of acquiring position information for mobile terminals in a counting target region that is a unit for counting mobile terminal position information, and address attribute information for the mobile terminals;

a region counting step of counting the number of mobile terminals, in an analysis target region which is a region specified in advance, based on position information for mobile terminals of which address attribute is an adjacent region that is adjacent to the analysis target region, at a reference time and at an analysis target time based on the position information acquired in the acquisition step;

an adjacent region counting step of counting the number of mobile terminals in the adjacent region based on position information for mobile terminals of which address attribute is the adjacent region, at the reference time and at the analysis target time based on the position information acquired in the acquisition step;

an intake coefficient calculation step of calculating an intake coefficient from a ratio of the number of mobile terminals in the analysis target region at the reference time counted in the region counting step to the number of mobile terminals in the adjacent region at the reference time counted in the adjacent region counting step;

an intaked terminal calculation step of multiplying the number of mobile terminals at the analysis target time counted in the region counting step, by the intake coefficient calculated in the intake coefficient calculation step, to calculate the number of intaked terminals; and

a mobile terminal calculation step of subtracting the number of intaked terminals that is calculated in the intaked terminal calculation step, from the number of mobile terminals at the analysis target time counted in the region counting step, to calculate an estimated number of mobile terminals.

**11.** A method for estimating the number of terminals, comprising:

a decision step of deciding, among position information counting unit regions which are counting units for position information, one or a plurality of position information counting unit regions included in an analysis target region which is a region specified in advance, as a position information counting region;

an expansion coefficient calculation step of calculating a region expansion coefficient from an area ratio of the analysis target region to the position information counting region decided in the decision step;

a counting step of counting, by address attribute, the number of mobile terminals located in the position information counting unit region decided in the decision step, based on position information; and

a calculation step of multiplying the number of mobile terminals by address attribute counted in the counting step, by the region expansion coefficient calculated in the expansion coefficient calculation step, to calculate an estimated number of mobile terminals.

**12.** A method for estimating the number of terminals, comprising:

a decision step of deciding, among position information counting unit regions which are counting units for position information, one or a plurality of position information counting unit regions included in an analysis target region which is a region specified in advance, as a position information counting region;

an address attribute ratio calculation step of calculating a ratio of address attributes of mobile terminals, in the position information counting region decided in the decision step;

a mobile terminal calculation step of calculating the number of mobile terminals in the analysis target region based on position information; and

an attribute-specific mobile terminal calculation step of multiplying the number of terminals calculated in the mobile terminal calculation step, by the ratio of one address attribute of the mobile terminals calculated in the address attribute ratio calculation step, to calculate an estimated number of mobile terminals for the one address attribute in the analysis target region.

# *Fig.1*

100

101

| POSITION INFORMATION
ACQUISITION PORTION |

106

| POSITION
INFORMATION DB |

102

| TERMINAL COUNTING
PORTION |

103

| INFAKE COEFFICIENT
CALCULATION PORTION |

108

104

| INFAKEN TERMINAL
CALCULATION PORTION |

| ANALYSIS OBJECT
REGION DB |

105

| ESTIMATED TERMINAL
CALCULATION PORTION |

INFORMATION PROCESSING
DEVICE

*Fig.2*

**Fig.3**

```
            ┌─────────────┐
            │    START    │
            └─────────────┘
                   │
    ┌──────────────────────────────┐
    │     ACQUIRE POSITION         │─── S101
    │       INFORMATION            │
    └──────────────────────────────┘
                   │
    ┌──────────────────────────────┐
    │ COUNT NUMBERS OF TERMINALS p(to) │─── S102
    │ AND p(t) IN ANALYSIS TARGET REGION │
    │ AT REFERENCE TIME to AND ANALYSIS │
    │ TARGET TIME t, BY ADDRESS ATTRIBUTE │
    └──────────────────────────────┘
                   │
    ┌──────────────────────────────┐
    │ COUNT NUMBERS OF TERMINALS q(to) │─── S103
    │  AND q(t) IN ADJACENT REGION OF │
    │  ANALYSIS TARGET REGION, HAVING │
    │ ADJACENT REGION AS ADDRESS ATTRIBUTE │
    └──────────────────────────────┘
                   │
    ┌──────────────────────────────┐
    │  CALCULATE INFAKE COEFFICIENT k, │─── S104
    │   WHICH IS THE RATIO (p(to)/q(to)) │
    │  OF NUMBER OF TERMINALS q(to) TO NUMBER │
    │  OF TERMINALS p(to) AT REFERENCE TIME │
    └──────────────────────────────┘
                   │
    ┌──────────────────────────────┐
    │ MULTIPLY NUMBER OF TERMINALS q(t) │─── S105
    │     BY INFAKE COEFFICIENT k │
    │    TO CALCULATE NUMBER OF │
    │     INFAKEN TERMINALS q'(t) │
    └──────────────────────────────┘
                   │
    ┌──────────────────────────────┐
    │ CALCULATE NUMBER OF TERMINALS p(t) │─── S106
    │   - NUMBER OF TERMINALS q'(t) │
    └──────────────────────────────┘
                   │
                   ▼
            ┌─────────────┐
            │     END     │
            └─────────────┘
```

**Fig.4**

| TERMINAL IDENTIFICATION INFORMATION | POSITION INFORMATION | TIME | ADDRESS ATTRIBUTE | ... |
|---|---|---|---|---|
| 10001 | S1 | 12:00 | TOWN Q | ... |
| 10002 | S1 | 12:01 | TOWN Q | |
| 10003 | S1 | 12:05 | TOWN Q | |
| 10004 | S2 | 13:01 | TOWN P | |
| 10005 | S1 | 13:05 | TOWN Q | |
| 10006 | S2 | 13:40 | TOWN P | |
| 10007 | S1 | 13:50 | TOWN P | |
| 10008 | S1 | 14:00 | TOWN P | |
| 10009 | S1 | 14:10 | TOWN Q | |
| ... | ... | ... | ... | |
| | | | | |

EP 2 693 376 A1

# Fig.5

| ANALYSIS TARGET TIME (t) | ANALYSIS TARGET REGION | ADDRESS ATTRIBUTE | NUMBER OF TERMINALS |
|---|---|---|---|
| 3:00-4:00 (REFERENCE TIME to) | p | TOWN P | xxx |
| 3:00-4:00 (REFERENCE TIME to) | p | TOWN Q | xxx |
| ... | ... | | |
| 12:00-13:00 | p | TOWN P | xxx |
| 12:00-13:00 | p | TOWN Q | xxx |
| ... | ... | | |
| 13:00-14:00 | p | TOWN P | xxx |
| 13:00-14:00 | p | TOWN Q | xxx |
| ... | ... | | |
| 3:00-4:00 (REFERENCE TIME to) | q | TOWN P | xxx |
| 3:00-4:00 (REFERENCE TIME to) | q | TOWN Q | xxx |
| ... | ... | | |
| 12:00-13:00 | q | TOWN P | xxx |
| 12:00-13:00 | q | TOWN Q | xxx |
| ... | ... | | |
| | | | |

EP 2 693 376 A1

*Fig.6*

ADJACENT REGION: TOWN Q — q

S2

S1

ANALYSIS TARGET REGION: TOWN P — P2

p

P1   P3   S3

## Fig.7

| TOWN B | TOWN A |
|--------|--------|
| TOWN P | |
| TOWN C | TOWN D |

# Fig.8

# Fig.9

```
        ┌──────────┐
        │  START   │
        └──────────┘
             │
┌─────────────────────────────────────┐
│  ACQUIRE POSITION INFORMATION       │──── S001
└─────────────────────────────────────┘
             │
┌─────────────────────────────────────┐
│ COUNT NUMBERS OF TERMINALS $A_p(t_0)$ AND │
│ $A_p(t)$ IN ADJACENT REGION A HAVING ANALYSIS │──── S1029
│ TARGET REGION p AS ADDRESS ATTRIBUTE AT │
│ REFERENCE TIME $t_0$ AND ANALYSIS TARGET TIME t │
└─────────────────────────────────────┘
             │
┌─────────────────────────────────────┐
│ COUNT NUMBERS OF TERMINALS $q_p(t)$ │
│ AND $q_p(t_0)$ IN ANALYSIS TARGET   │──── S1039
│ REGION p HAVING ANALYSIS TARGET     │
│ REGION p AS ADDRESS ATTRIBUTE       │
└─────────────────────────────────────┘
             │
┌─────────────────────────────────────┐
│ CALCULATE INFAKE COEFFICIENT $k_{pA}$ AS │
│ RATIO $(A_p(t)／q_p(t_0))$ OF NUMBER OF │──── S1049
│ TERMINALS $q_p(t_0)$ TO NUMBER OF   │
│ TERMINALS $A_p(t_0)$ AT REFERENCE TIME │
└─────────────────────────────────────┘
             │
┌─────────────────────────────────────┐
│ COUNT NUMBER OF TERMINALS $A_p(t)$  │
│ BY INFAKE COEFFICIENT $k_{pA}$,     │──── S1059
│ CALCULATE NUMBER OF                 │
│ INFAKEN TERMINALS $q_{pA}'(t)$      │
└─────────────────────────────────────┘
             │
        ┌──────────┐
        │   END    │
        └──────────┘
```

# Fig.10

```
        ┌─────────────┐
        │    START    │
        └─────────────┘
               │
┌──────────────────────────────────┐
│  COUNT NUMBER OF MOBILE TERMINALS p(t)  │
│          IN ANALYSIS TARGET             │── S111
│ REGION p HAVING ANALYSIS TARGET REGION p│
│         AS ADDRESS ATTRIBUTE            │
└──────────────────────────────────┘
               │
┌──────────────────────────────────┐
│      CALCULATE TOTAL NUMBER OF          │
│  INFAKEN TERMINALS $q_{pA}'(t)$ TO $q_{pD}'(t)$ │── S112
│  IN ADJACENT REGIONS A TO D, CALCULATE  │
│ TOTAL NUMBER OF INFAKEN TERMINALS $q_{total}'(t)$ │
└──────────────────────────────────┘
               │
┌──────────────────────────────────┐
│       CALCULATE NUMBER OF               │
│        MOBILE TERMINALS p(t)            │── S113
│         + TOTAL NUMBER OF               │
│  INFAKEN TERMINALS $q_{total}'(t)$      │
└──────────────────────────────────┘
               │
        ┌─────────────┐
        │     END     │
        └─────────────┘
```

# *Fig.11*

200

206

POSITION INFORMATION
ACQUISITION PORTION ⟍201

POSITION
INFORMATION DB

204

TERMINAL COUNTING
PORTION

202

POSITION INFORMATION
COUNTING REGION
DECISION PORTION

208

REGION EXPANSION
COEFFICIENT CALCULATION
PORTION

POSITION
INFORMATION
COUNTING UNIT
REGION DB

203

ESTIMATED TERMINAL
CALCULATION PORTION

205

ANALYSIS OBJECT
REGION DB

209 INFORMATION PROCESSING
DEVICE

# Fig.12

ANALYSIS TARGET AREA: TOWN A

## Fig.13

## Fig.14

START

DEFINE ANALYSIS TARGET REGION AND POSITION INFORMATION COUNTING UNIT REGION — S201

DECIDE POSITION INFORMATION COUNTING REGION FOR ANALYSIS TARGET REGION — S202

CALCULATE REGION EXPANSION COEFFICIENT — S203

CALCULATE NUMBER OF MOBILE TERMINALS BY ADDRESS ATTRIBUTE IN POSITION INFORMATION COUNTING REGION — S204

MULTIPLY REGION EXPANSION COEFFICIENT BY ESTIMATED NUMBER OF TERMINALS, CALCULATE ESTIMATED NUMBER OF MOBILE TERMINALS — S205

END

## *Fig.15*

200a

201 POSITION INFORMATION ACQUISITION PORTION

206 POSITION INFORMATION DB

204a TERMINAL COUNTING PORTION

202 POSITION INFORMATION COUNTING REGION DECISION PORTION

ATTRIBUTE PROPORTION CALCULATION PORTION

208 POSITION INFORMATION COUNTING UNIT REGION DB

203a

ESTIMATED TERMINAL CALCULATION PORTION

205a

ANALYSIS OBJECT REGION DB

209 INFORMATION PROCESSING DEVICE

## Fig.16

```
                    START

        DEFINE REGION FOR ANALYSIS AND        S301
            POSITION INFORMATION
            COUNTING UNIT REGION

        DECIDE POSITION INFORMATION           S302
            COUNTING REGION
         FOR ANALYSIS TARGET REGION

        CALCULATE PROPORTIONS IN              S303
           POSITION INFORMATION
            COUNTING REGION
           BY ADDRESS ATTRIBUTE

        CALCULATE NUMBER OF                   S304
         ALL MOBILE TERMINALS
         IN FOR ANALYSIS REGION

    MULTIPLY NUMBER OF ALL TERMINALS BY       S305
      ADDRESS ATTRIBUTE PROPORTIONS,
    TO CALCULATE ESTIMATED NUMBERS OF
   MOBILE TERMINALS BY ADDRESS ATTRIBUTE

                    END
```

*Fig.17*

*Fig.18*

MODEL

$a_5$

SECTOR S

$a_2$

$a_2$

$a_1$

$a_4$

NUMBER OF SIGNALS ($x_i$) FROM $a_i$ OBSERVED
IN AREA S IN OBSERVATION PERIOD

OBSERVATION
PERIOD (T)

$q_{i0}$  $q_{i1}$  $q_{i2}$  $q_{i3}$  $q_{i4}$

TERMINAL $a_i$

VISIT DURATION OF $a_i$ IN S

t

VISIT DURATION ($t_i$) OF $a_i$ IN S DURING OBSERVATION PERIOD

m IS RESULT OF DIVISION OF SUM OF THESE BY T

EP 2 693 376 A1

*Fig.19*

OBSERVATION PERIOD (T)

$w_{i1}/2$   $w_{i2}/2$   $w_{i3}/2$

$q_{i0}$   $q_{i1}$   $q_{i2}$   $q_{i3}$   $q_{i4}$

TERMINAL $a_i$                                                    t

VISIT DURATION OF $a_i$ IN S

ESTIMATED VALUE OF $t_i$

**INTERNATIONAL SEARCH REPORT**

| International application No. |
| --- |
| PCT/JP2012/058421 |

**A. CLASSIFICATION OF SUBJECT MATTER**
*G06Q10/00*(2012.01)i, *G06Q50/32*(2012.01)i, *H04W4/02*(2009.01)i

According to International Patent Classification (IPC) or to both national classification and IPC

**B. FIELDS SEARCHED**

Minimum documentation searched (classification system followed by classification symbols)
G06Q10/00, G06Q50/32, H04W4/02

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A<br>X | JP 2003-122877 A (Oki Electric Industry Co., Ltd.),<br>25 April 2003 (25.04.2003),<br>entire text; all drawings<br>(Family: none) | 1-6,9-10<br>7-8,11-12 |
| A | WO 2010/119948 A1 (NTT Docomo Inc.),<br>21 October 2010 (21.10.2010),<br>entire text; all drawings<br>(Family: none) | 1-12 |
| A | JP 2010-271778 A (NTT Docomo Inc.),<br>02 December 2010 (02.12.2010),<br>entire text; all drawings<br>(Family: none) | 1-12 |

☒ Further documents are listed in the continuation of Box C.      ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 18 June, 2012 (18.06.12) | 26 June, 2012 (26.06.12) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2012/058421 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | WO 2011/021608 A1  (NTT Docomo Inc.),<br>24 February 2011 (24.02.2011),<br>entire text; all drawings<br>(Family: none) | 1-12 |
| A | JP 2010-200283 A  (Softbank BB Corp.),<br>09 September 2010 (09.09.2010),<br>entire text; all drawings<br>& JP 4364936 B | 1-12 |

Form PCT/ISA/210 (continuation of second sheet) (July 2009)

## INTERNATIONAL SEARCH REPORT

International application No.

PCT/JP2012/058421

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The invention as laid out in claims 1, 6, 9, and 10, the invention as laid out in claims 7 and 11, and the invention as laid out in claims 8 and 12 do not each have the same or corresponding special technical feature.  In addition, the 3 inventions (groups) indicated below are included in the claims.
    (Invention 1) The invention as laid out in claims 1 to 6, and 9 to 10:  An information processing device provided with acquisition means, object area aggregation means, adjacent area aggregation means, and extraneous terminal quantity calculation means.

    (Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2012/058421 |

Continuation of Box No.III of continuation of first sheet(2)

    (Invention 2)  The invention as laid out in claims 7 and 11:  An information processing device provided with determination means, magnification coefficient calculation means, aggregation means, and calculation means.

    (Invention 3)  The invention as laid out in claims 8 and 12:  An information processing device provided with determination means, address attribute ratio calculation means, mobile terminal quantity calculation means, and mobile terminal quantity by attribute calculation means.

Form PCT/ISA/210 (extra sheet) (July 2009)

**EP 2 693 376 A1**

**Patent documents cited in the description**

- JP 2003030373 A